# EUROPEAN PATENT SPECIFICATION

(11) **EP 4 395 305 B1**
(45) Date of publication and mention of the grant of the patent: **06.05.2026**
(21) Application number: 23778019.2
(22) Date of filing: 23.03.2023
(51) Int. Cl.: H04N 7/14, H04L 65/402, H04L 9/40, G06F 21/32

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 28.03.2022 CN 202210317245
(43) Date of publication of application: 03.07.2024
(73) Proprietor: Huawei Technologies Co., Ltd., Shenzhen, Guangdong 518129 (CN)
(72) Inventor: FENG, Junhui, Shenzhen, Guangdong 518129 (CN); ZHUANG, Naifeng, Shenzhen, Guangdong 518129 (CN); ZHANG, Chunhe, Shenzhen, Guangdong 518129 (CN); WANG, Kun, Shenzhen, Guangdong 518129 (CN); XU, Changyue, Shenzhen, Guangdong 518129 (CN)
(74) Representative: Gill Jennings & Every LLP
(86) International application number: PCT/CN2023/083488
(87) International publication number: WO 2023/185650

(56) References cited:
- CN-A- 110 572 607
- CN-A- 111 835 531
- CN-A- 113 055 338
- US-A1- 2020 259 845
- US-A1- 2020 342 084

## Description

### TECHNICAL FIELD

Embodiments of this application relate to the field of communication technologies, and in particular, to a communication method, apparatus, and system.

### BACKGROUND

Based on a carrier network, in a process in which a user makes a voice/video call with a customer service center by using a terminal, face recognition is performed on the user to implement online user identity authentication, so that a secure and convenient service can be provided for the user.

Currently, when face recognition is performed on a user online, an application (application, APP) for face recognition needs to be installed on a terminal (referred to as a user terminal for short) held by the user. The APP is an APP that is specified by the customer service center and used to perform face recognition on the user. Next, the user terminal acquires a face image of the user and uploads the face image to the APP. The APP completes the face recognition, or the APP sends the face image to a recognition server and the recognition server then completes the face recognition.

In the foregoing face recognition method, the APP needs to be installed on the user terminal and performs complex operations, and high skills are required for a staff. In addition, a transmission channel dedicated to transmitting the face image needs to be established between the user terminal and the APP. If face recognition is performed in a call process, additional bandwidth resources need to be occupied to establish the transmission channel dedicated to transmitting the face image, and additional port resources of the user terminal also need to be occupied to transmit the face image based on the transmission channel. US2020/342084A1 discloses a method for recognizing an identity in a video conference and related device. US2020/259845A1 discloses methods for providing access control and identity verification for communications.

### SUMMARY

Embodiments of this application provide a communication method, apparatus, and system, to reduce bandwidth resources and port resources of a terminal that are occupied by performing face recognition in a call process.

To achieve the foregoing objective, the following technical solutions are used in embodiments of this application.

According to a first aspect, an embodiment of this application provides a communication method, where the method is performed by a call terminal, and the method includes: establishing a video call media transmission channel, where the video call media transmission channel is used to transmit a call video stream between the call terminal and a peer call terminal in a video call service, and the call video stream includes video content photographed by the call terminal or the peer call terminal; next receiving a SIP message from a media server, where the SIP message includes a face recognition request identifier, and the face recognition request identifier is for requesting to perform face recognition on a user corresponding to the call terminal; sending a response message of the SIP message to the media server, where the response message of the SIP message indicates that the user corresponding to the call terminal agrees to perform face recognition; further sending a face video stream to the media server through the video call media transmission channel, where the face video stream includes a face image of the user corresponding to the call terminal; and then receiving a face recognition result from the media server.

In the communication method provided in this embodiment of this application, when face recognition needs to be performed in a call process, the call terminal may transmit the face video stream through the video call media transmission channel originally used to transmit the call video stream. In this way, no additional bandwidth resources need to be consumed to establish a transmission channel dedicated to transmitting the face video stream, and no additional port resources of the call terminal need to be occupied.

Further, compared with an existing communication method, in the technical solution provided in this embodiment of this application, a face recognition APP does not need to be installed on the terminal. In this way, an operator does not need to perform complex related operations, high operation skills are not required for the operator, and a call does not need to be interrupted.

In a possible implementation, the face video stream is a video stream photographed by using a camera apparatus of the call terminal. Alternatively, the face video stream is a video stream obtained from a storage apparatus of the call terminal.

In a possible implementation, the communication method provided in this embodiment of this application further includes: receiving source indication information from the media server, where the source indication information indicates that the call terminal obtains the face video stream by using the camera apparatus of the call terminal or obtains the face video stream from the storage apparatus of the call terminal.

In a possible implementation, the face video stream is the video stream obtained from the storage apparatus of the call terminal, and before the sending a face video stream to the media server through the video call media transmission channel, the communication method provided in this embodiment of this application further includes: receiving transmission channel indication information from the media server, where the transmission channel indication information indicates the call terminal to transmit the face video stream through the video call media transmission channel. The transmission channel indication information may be carried in the SIP message. The media server may indicate, by using an explicit indication method (that is, by sending the transmission channel indication information), to transmit the face video stream through the video call media transmission channel. In some cases, the media server may alternatively indicate, by using an implicit indication method, to transmit the face video stream through the video call media transmission channel, where, for example, SDP information of the media server is carried in the SIP message, and SDP information of the call terminal is carried in the response message of the SIP message, to negotiate (or indicate) to transmit the face video stream through the video call media transmission channel established based on this pair of SDP information (the SDP information of the media server and the SDP of the call terminal). It should be understood that the video call media transmission channel is originally used to transmit the call video stream.

In a possible implementation, before the sending a face video stream to the media server through the video call media transmission channel, the method further includes: stopping transmitting the call video stream through the video call media transmission channel. In this way, the face video stream obtained from the storage apparatus of the call terminal may be transmitted through the video call media transmission channel.

It can be noted that, when the face video stream transmitted by the call terminal is the video stream photographed by using the camera apparatus of the call terminal, the video call media transmission channel actually does not stop the transmission of the call video stream, that is, the face video stream is the call video stream. A difference is that content of the call video stream may change from another video content to video content including the face image.

In a possible implementation, the method provided in this embodiment of this application further includes: receiving posture indication information from the media server, where the posture indication information indicates the user corresponding to the call terminal to adjust a posture of the user, so that the face image meets a preset condition.

In this embodiment of this application, when the face video stream is the video stream photographed by using the camera apparatus of the call terminal, the call terminal captures the face image of the user in real time, and transmits the face image to the media server. It may be understood that, when the camera apparatus of the call terminal captures the face image, the captured face image may not meet the preset condition due to impact of a head posture of the user, where the preset condition may include but is not limited to a position, an angle, and the like of the user head within a specified range (for example, the face should be located within a preset detection frame, and a front side of the face of the user should face the camera apparatus). In this way, face recognition cannot be performed or a face recognition result is inaccurate. Based on this, after receiving the face video stream sent by the call terminal, when determining that the face image in the face video stream does not meet the preset condition, the media server may send posture indication information to the call terminal (correspondingly, the call terminal receives the posture indication information from the media server), where the posture indication information indicates the user corresponding to the call terminal to adjust the posture of the user, so that the face image meets the preset condition. For example, when the face of the user is not entirely within the preset detection frame, the posture indication information is information for prompting the user to place the entire face within the detection frame, or when the angle of the face of the user is inappropriate, the posture indication information is information for prompting the user to rotate the face in a direction (for example, prompting the user to route the head rightwards).

In a possible implementation, the face recognition result may include information indicating that face recognition succeeds or information indicating that face recognition fails. Optionally, when the face image extracted from the face video stream is consistent with a face image registered in a carrier system, the face recognition result may further include identifier information of a registered user corresponding to the call terminal. For example, the identifier information of the registered user includes but is not limited to identity information such as a name and a certificate of the user.

In a possible implementation, the face recognition request identifier may be carried in a header field of the SIP message, or when the SIP message includes SDP information of the media server, the face recognition request identifier may alternatively be carried in the SDP information of the media server.

According to a second aspect, an embodiment of this application provides a communication method, where the method is performed by a call terminal, and the method includes: establishing a video call media transmission channel, where the video call media transmission channel is used to transmit a call video stream between the call terminal and a peer call terminal in a video call service, and the call video stream includes video content photographed by the call terminal or the peer call terminal; next sending a face recognition application to a media server, where the face recognition application includes a face recognition application identifier, and the face recognition application identifier is used to apply for performing face recognition on a user corresponding to the peer call terminal communicating with the call terminal; receiving a face recognition result from the media server through the video call media transmission channel, where the face recognition result is a result of performing, based on a face video stream, face recognition on the user corresponding to the peer call terminal; and then processing a service request of the peer call terminal based on the face recognition result.

According to the communication method provided in this embodiment of this application, when face recognition needs to be performed in a call process, after the media server obtains the face recognition result of performing face recognition on the user corresponding to the peer call terminal, the media server may transmit the face recognition result through the video call media transmission channel originally used to transmit the call video stream. In this way, no additional bandwidth resources need to be consumed to establish a transmission channel dedicated to transmitting the face recognition result, and no additional port resources of the call terminal need to be occupied.

Further, compared with an existing communication method, in the technical solution provided in this embodiment of this application, a face recognition APP does not need to be installed on the terminal. In this way, an operator does not need to perform complex related operations, high operation skills are not required for the operator, and a call does not need to be interrupted.

In a possible implementation, the face video stream is a video stream photographed by using a camera apparatus of the peer call terminal. Alternatively, the face video stream is a video stream obtained from a storage apparatus of the peer call terminal.

In a possible implementation, before the receiving a face recognition result from the media server through the video call media transmission channel, the communication method provided in this embodiment of this application further includes: receiving transmission channel indication information from the media server, where the transmission channel indication information indicates the call terminal to receive the face recognition result through the video call media transmission channel. Similar to the first aspect, the transmission channel indication information may be carried in a SIP message. The media server may indicate, by using an explicit indication method (that is, by sending the transmission channel indication information), to transmit the face recognition result through the video call media transmission channel. In some cases, the media server may alternatively indicate, by using an implicit indication method, to transmit the face recognition result through the video call media transmission channel.

In a possible implementation, before the receiving a face recognition result from the media server through the video call media transmission channel, the communication method provided in this embodiment of this application further includes: stopping transmitting the call video stream through the video call media transmission channel. In this way, the face recognition result may be transmitted through the video call media transmission channel.

In a possible implementation, the face recognition result includes information indicating that face recognition succeeds or information indicating that face recognition fails, and the processing a service request of the peer call terminal based on the face recognition result includes: processing the service request of the peer call terminal when the face recognition result includes the information indicating that the face recognition succeeds. In this way, it can be ensured that a service of the user is securely processed.

According to a third aspect, an embodiment of this application provides a communication method, where the method is performed by a media server, and the method includes: establishing a first video call media transmission channel and a second video call media transmission channel, where the first video call media transmission channel is a video call media transmission channel between a call terminal and the media server, and the second video call media transmission channel is a video call media transmission channel between the media server and a peer call terminal; and the first video call media transmission channel and the second video call media transmission channel are used to transmit a call video stream between the call terminal and the peer call terminal in a video call service, and the call video stream includes video content photographed by the call terminal or the peer call terminal; next receiving a face recognition application from the peer call terminal, where the face recognition application includes a face recognition application identifier, and the face recognition application identifier is used to apply for performing face recognition on a user corresponding to the call terminal communicating with the peer call terminal; receiving a face video stream from the call terminal through the first video call media transmission channel, where the face video stream includes a face image of the user corresponding to the call terminal; further obtaining a face recognition result, where the face recognition result is a result of performing, based on the face video stream, face recognition on the user corresponding to the call terminal; and then sending the face recognition result to the peer call terminal through the second video call media transmission channel, to trigger the peer call terminal to process a service request of the call terminal based on the face recognition result.

In the communication method provided in this embodiment of this application, when face recognition needs to be performed in a call process, the media server may receive the face video stream and send the face recognition result through the video call media transmission channels originally used to transmit the call video stream. In this way, no additional bandwidth resources need to be consumed to establish a transmission channel dedicated to transmitting the face video stream, and no additional port resources of the call terminal need to be occupied.

Further, compared with an existing communication method, in the technical solution provided in this embodiment of this application, a face recognition APP does not need to be installed on the terminal. In this way, an operator does not need to perform complex related operations, high operation skills are not required for the operator, and a call does not need to be interrupted.

After the receiving a face recognition application from the peer call terminal, the communication method provided in this embodiment of this application further includes: sending a session initiation protocol SIP message to the call terminal, where the SIP message includes a face recognition request identifier, and the face recognition request identifier is for requesting to perform face recognition on the user corresponding to the call terminal; and receiving a response message of the SIP message from the call terminal, where the response message of the SIP message indicates that the user corresponding to the call terminal agrees to perform face recognition.

In this embodiment of this application, the face recognition request identifier may be carried in a header field of the SIP message, or when the SIP message includes SDP information of the media server, the face recognition request identifier may alternatively be carried in the SDP information of the media server.

In a possible implementation, the face video stream is a video stream photographed by using a camera apparatus of the call terminal. Alternatively, the face video stream is a video stream obtained from a storage apparatus of the call terminal.

In a possible implementation, the communication method provided in this embodiment of this application further includes: sending source indication information to the call terminal, where the source indication information indicates that the call terminal obtains the face video stream by using the camera apparatus of the call terminal or obtains the face video stream from the storage apparatus of the call terminal.

In a possible implementation, the face video stream is the video stream obtained from the storage apparatus of the call terminal, and before the receiving a face video stream from the call terminal through the first video call media transmission channel, the communication method provided in this embodiment of this application further includes: sending first transmission channel indication information to the call terminal, where the first transmission channel indication information indicates the call terminal to transmit the face video stream through the first video call media transmission channel.

In a possible implementation, before the receiving a face video stream from the call terminal through the first video call media transmission channel, the communication method provided in this embodiment of this application further includes: stopping transmitting the call video stream through the first video call media transmission channel.

In a possible implementation, before the sending the face recognition result to the peer call terminal through the second video call media transmission channel, the communication method provided in this embodiment of this application further includes: sending second transmission channel indication information to the peer call terminal, where the second transmission channel indication information indicates the peer call terminal to receive the face recognition result through the second video call media transmission channel.

In a possible implementation, before the sending the face recognition result to the peer call terminal through the second video call media transmission channel, the communication method provided in this embodiment of this application further includes: stopping transmitting the call video stream through the second video call media transmission channel.

In a possible implementation, after the obtaining a face recognition result, the communication method provided in this embodiment of this application further includes: sending the face recognition result to the call terminal.

In this embodiment of this application, the face recognition result is a result of performing, based on the face video stream, face recognition on the user corresponding to the call terminal, and the face recognition result may include information indicating that face recognition succeeds or information indicating that face recognition fails. Optionally, when the face image extracted from the face video stream is consistent with a face image registered in a carrier system, the face recognition result may further include identifier information of a registered user corresponding to the call terminal. For example, the identifier information of the registered user includes but is not limited to identity information such as a name and a certificate of the user.

In a possible implementation, the communication method provided in this embodiment of this application further includes: sending posture indication information to the call terminal, where the posture indication information indicates the user corresponding to the call terminal to adjust a posture of the user, so that the face image meets a preset condition.

In a possible implementation, after the receiving a face video stream from the call terminal through the first video call media transmission channel, the communication method provided in this embodiment of this application further includes: extracting a target face image from the face video stream; and sending the target face image to a face recognition server, to trigger the face recognition server to perform, based on the target face image, face recognition on the user corresponding to the call terminal. Based on this, the obtaining a face recognition result includes: receiving the face recognition result from the face recognition server. In this embodiment of this application, if the media server does not have a face recognition function, a face recognition process is performed by the face recognition server dedicated to the face recognition. It may be understood that, the face recognition server is a server of the carrier system, and the face recognition server maintains the face image of the user registered in the carrier system and other related information.

Optionally, the media server may alternatively have a face recognition function. The media server maintains the face image of the user registered in the carrier system and other related information. In this case, the media server extracts a target face image from the face video stream; and performs, based on the target face image, face recognition on the user corresponding to the call terminal, to obtain the face recognition result.

For related content and technical effects of the third aspect, refer to content and technical effects in any one of the first aspect, the second aspect, and the possible implementations of the first aspect and the second aspect.

According to a fourth aspect, an embodiment of this application provides a call terminal, including a processing module, a receiving module, and a sending module. The processing module is configured to establish a video call media transmission channel, where the video call media transmission channel is used to transmit a call video stream between the call terminal and a peer call terminal in a video call service, and the call video stream includes video content photographed by the call terminal or the peer call terminal. The receiving module is configured to receive a session initiation protocol SIP message from a media server, where the SIP message includes a face recognition request identifier, and the face recognition request identifier is for requesting to perform face recognition on a user corresponding to the call terminal. The sending module is configured to send a response message of the SIP message to the media server, where the response message of the SIP message indicates that the user corresponding to the call terminal agrees to perform face recognition. The sending module is further configured to send a face video stream to the media server through the video call media transmission channel, where the face video stream includes a face image of the user corresponding to the call terminal. The receiving module is further configured to receive a face recognition result from the media server.

In a possible implementation, the face video stream is a video stream photographed by using a camera apparatus of the call terminal. Alternatively, the face video stream is a video stream obtained from a storage apparatus of the call terminal.

In a possible implementation, the receiving module is further configured to receive source indication information from the media server, where the source indication information indicates that the call terminal obtains the face video stream by using the camera apparatus of the call terminal or obtains the face video stream from the storage apparatus of the call terminal.

In a possible implementation, the face video stream is a video stream obtained from a storage apparatus of the call terminal, and the receiving module is further configured to receive transmission channel indication information from the media server, where the transmission channel indication information indicates the call terminal to transmit the face video stream through the video call media transmission channel.

In a possible implementation, the processing module is further configured to control the receiving module or the sending module to stop transmitting the call video stream through the video call media transmission channel.

In a possible implementation, the receiving module is further configured to receive posture indication information from the media server, where the posture indication information indicates the user corresponding to the call terminal to adjust a posture of the user, so that the face image meets a preset condition.

According to a fifth aspect, an embodiment of this application provides a call terminal, including a processing module, a sending module, and a receiving module. The processing module is configured to establish a video call media transmission channel, where the video call media transmission channel is used to transmit a call video stream between the call terminal and a peer call terminal in a video call service, and the call video stream includes video content photographed by the call terminal or the peer call terminal. The sending module is configured to send a face recognition application to a media server, where the face recognition application includes a face recognition application identifier, and the face recognition application identifier is used to apply for performing face recognition on a user corresponding to the peer call terminal communicating with the call terminal. The receiving module is configured to receive a face recognition result from the media server through the video call media transmission channel, where the face recognition result is a result of performing, based on a face video stream, face recognition on the user corresponding to the peer call terminal. The processing module is further configured to process a service request of the peer call terminal based on the face recognition result.

In a possible implementation, the face video stream is a video stream photographed by using a camera apparatus of the peer call terminal. Alternatively, the face video stream is a video stream obtained from a storage apparatus of the peer call terminal.

In a possible implementation, the receiving module is further configured to receive transmission channel indication information from the media server, where the transmission channel indication information indicates the call terminal to receive the face recognition result through the video call media transmission channel.

In a possible implementation, the processing module is further configured to control the sending module or the receiving module to stop transmitting the call video stream through the video call media transmission channel.

In a possible implementation, the face recognition result includes information indicating that face recognition succeeds or information indicating that face recognition fails, and the processing module is further configured to process the service request of the peer call terminal when the face recognition result includes the information indicating that the face recognition succeeds.

According to a sixth aspect, an embodiment of this application provides a media server, including a processing module, a receiving module, an obtaining module, and a sending module. The processing module is configured to establish a first video call media transmission channel and a second video call media transmission channel, where the first video call media transmission channel is a video call media transmission channel between a call terminal and the media server, and the second video call media transmission channel is a video call media transmission channel between the media server and a peer call terminal; and the first video call media transmission channel and the second video call media transmission channel are used to transmit a call video stream between the call terminal and the peer call terminal in a video call service, and the call video stream includes video content photographed by the call terminal or the peer call terminal. The receiving module is configured to: receive a face recognition application from the peer call terminal, where the face recognition application includes a face recognition application identifier, and the face recognition application identifier is used to apply for performing face recognition on a user corresponding to the call terminal communicating with the peer call terminal; and receive a face video stream from the call terminal through the first video call media transmission channel, where the face video stream includes a face image of the user corresponding to the call terminal. The obtaining module is configured to obtain a face recognition result, where the face recognition result is a result of performing, based on the face video stream, face recognition on the user corresponding to the call terminal. The sending module is configured to send the face recognition result to the peer call terminal through the second video call media transmission channel, to trigger the peer call terminal to process a service request of the call terminal based on the face recognition result.

In a possible implementation, the sending module is further configured to send a session initiation protocol SIP message to the call terminal, where the SIP message includes a face recognition request identifier, and the face recognition request identifier is for requesting to perform face recognition on the user corresponding to the call terminal. The receiving module is further configured to receive a response message of the SIP message from the call terminal, where the response message of the SIP message indicates that the user corresponding to the call terminal agrees to perform face recognition.

In a possible implementation, the face video stream is a video stream photographed by using a camera apparatus of the call terminal. Alternatively, the face video stream is a video stream obtained from a storage apparatus of the call terminal.

In a possible implementation, the sending module is further configured to send source indication information to the call terminal, where the source indication information indicates that the call terminal obtains the face video stream by using the camera apparatus of the call terminal or obtains the face video stream from the storage apparatus of the call terminal.

In a possible implementation, the face video stream is the video stream obtained from the storage apparatus of the call terminal, and the sending module is further configured to send first transmission channel indication information to the call terminal, where the first transmission channel indication information indicates the call terminal to transmit the face video stream through the first video call media transmission channel.

In a possible implementation, the processing module is further configured to control the sending module or the receiving module to stop transmitting the call video stream through the first video call media transmission channel.

In a possible implementation, the sending module is further configured to send second transmission channel indication information to the peer call terminal, where the second transmission channel indication information indicates the peer call terminal to receive the face recognition result through the second video call media transmission channel.

In a possible implementation, the processing module is further configured to control the sending module or the receiving module to stop transmitting the call video stream through the second video call media transmission channel.

In a possible implementation, the sending module is further configured to send the face recognition result to the call terminal.

In a possible implementation, the sending module is further configured to send posture indication information to the call terminal, where the posture indication information indicates the user corresponding to the call terminal to adjust a posture of the user, so that the face image meets a preset condition.

In a possible implementation, the processing module is further configured to extract a target face image from the face video stream. The sending module is further configured to send the target face image to a face recognition server, to trigger the face recognition server to perform, based on the target face image, face recognition on the user corresponding to the call terminal. The obtaining module is specifically configured to receive the face recognition result from the face recognition server.

According to a seventh aspect, an embodiment of this application provides a call terminal, including a memory and at least one processor connected to the memory. The memory is configured to store computer program code, the computer program code includes computer instructions, and when the computer instructions are executed by the at least one processor, the call terminal is enabled to perform the method according to any one of the first aspect and the possible implementations of the first aspect.

According to an eighth aspect, an embodiment of this application provides a call terminal, including a memory and at least one processor connected to the memory. The memory is configured to store computer program code, the computer program code includes computer instructions, and when the computer instructions are executed by the at least one processor, the call terminal is enabled to perform the method according to any one of the second aspect and the possible implementations of the second aspect.

According to a ninth aspect, an embodiment of this application provides a media server, including a memory and at least one processor connected to the memory. The memory is configured to store computer program code, the computer program code includes computer instructions, and when the computer instructions are executed by the at least one processor, the media server is enabled to perform the method according to any one of the third aspect and the possible implementations of the third aspect.

According to a tenth aspect, an embodiment of this application provides a computer-readable storage medium, including computer instructions. When the computer instructions are run on a call terminal, the call terminal is enabled to perform the method according to any one of the first aspect and the possible implementations of the first aspect.

According to an eleventh aspect, an embodiment of this application provides a computer-readable storage medium, including computer instructions. When the computer instructions are run on a call terminal, the call terminal is enabled to perform the method according to any one of the second aspect and the possible implementations of the second aspect.

According to a twelfth aspect, an embodiment of this application provides a computer-readable storage medium, including computer instructions. When the computer instructions are run on a media server, the media server is enabled to perform the method according to any one of the third aspect and the possible implementations of the third aspect.

According to a thirteenth aspect, an embodiment of this application provides a computer program product. When the computer program product runs on a computer, the method according to any one of the first aspect and the possible implementations of the first aspect is performed.

According to a fourteenth aspect, an embodiment of this application provides a computer program product. When the computer program product runs on a computer, the method according to any one of the second aspect and the possible implementations of the second aspect is performed.

According to a fifteenth aspect, an embodiment of this application provides a computer program product. When the computer program product runs on a computer, the method according to any one of the third aspect and the possible implementations of the third aspect is performed.

According to a sixteenth aspect, an embodiment of this application provides a chip, including a memory and a processor. The memory is configured to store computer instructions. The processor is configured to: invoke the computer instructions from the memory and run the computer instructions, so that a call terminal performs the method according to any one of the first aspect and the possible implementations of the first aspect.

According to a seventeenth aspect, an embodiment of this application provides a chip, including a memory and a processor. The memory is configured to store computer instructions. The processor is configured to: invoke the computer instructions from the memory and run the computer instructions, so that a call terminal performs the method according to any one of the second aspect and the possible implementations of the second aspect.

According to an eighteenth aspect, an embodiment of this application provides a chip, including a memory and a processor. The memory is configured to store computer instructions. The processor is configured to invoke the computer instructions from the memory and run the computer instructions, so that a media server performs the method according to any one of the third aspect and the possible implementations of the third aspect.

According to a nineteenth aspect, an embodiment of this application provides a communication system, including a call terminal, a peer call terminal, and a media server. The call terminal performs the method according to any one of the first aspect and the possible implementations of the first aspect, the peer call terminal performs the method according to any one of the second aspect and the possible implementations of the second aspect, and the media server performs the method according to any one of the third aspect and the possible implementations of the third aspect.

It should be understood that for beneficial effects achieved by the technical solutions in the fourth aspect to the nineteenth aspect and the corresponding possible implementations, refer to the foregoing technical effects in the first aspect to the third aspect and the corresponding possible implementations. Details are not described herein again.

### BRIEF DESCRIPTION OF DRAWINGS

FIG. 1 is a schematic diagram of an architecture of a communication system in a service scenario of a manual customer service according to an embodiment of this application;
FIG. 2 is a schematic flowchart of a voice call according to an embodiment of this application;
FIG. 3 is a schematic flowchart of a video call according to an embodiment of this application;
FIG. 4A is a schematic diagram of hardware of a mobile phone according to an embodiment of this application;
FIG. 4B is a block diagram of a software structure of a mobile phone according to an embodiment of this application;
FIG. 5 is a schematic diagram of hardware of a server according to an embodiment of this application;
FIG. 6 is a schematic diagram 1 of a communication method according to an embodiment of this application;
FIG. 7A and FIG. 7B are a schematic diagram 2 of a communication method according to an embodiment of this application;
FIG. 8 is a schematic diagram of a structure of a call terminal according to an embodiment of this application;
FIG. 9 is a schematic diagram of another structure of a call terminal according to an embodiment of this application;
FIG. 10 is a schematic diagram of a structure of a call terminal according to an embodiment of this application;
FIG. 11 is a schematic diagram of another structure of a call terminal according to an embodiment of this application;
FIG. 12 is a schematic diagram of a structure of a media server according to an embodiment of this application; and
FIG. 13 is a schematic diagram of another structure of a media server according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular sequence of the objects. For example, a first video call media transmission channel, a second video call media transmission channel, and the like are used to distinguish between different video call media transmission channels, but are not used to describe a particular sequence of the video call media transmission channels.

In embodiments of this application, the term "example", "for example", or the like is used to represent giving an example, an illustration, or a description. Any embodiment or design solution described as an "example" or "for example" in embodiments of this application should not be explained as being more preferred or having more advantages than another embodiment or design solution. Exactly, use of the term "example", "for example", or the like is intended to present a related concept in a specific manner.

Currently, based on a mobile network, a voice call or a video call between users may be implemented by using terminals. The voice call is used as an example. A user 1 may dial, by using a terminal 1 held by the user 1, a number (for example, a phone number) of a terminal 2 held by a user 2. After the user 2 makes a response by using the terminal 2, a call connection may be established between the terminal 1 held by the user 1 and the terminal 2 held by the user 2, so that the user 1 and the user 2 may perform the voice call. For example, the terminal 1 acquires a voice of the user 1, and sends the acquired voice to the terminal 2, and the terminal 2 acquires a voice of the user 2, and sends the acquired voice to the terminal 1.

It may be understood that, in a scenario of a call between terminals, one of the terminals may be referred to as a call terminal, and a peer end communicating with the call terminal is referred to as a peer call terminal. For example, if the terminal 1 is a call terminal, the terminal 2 is a peer call terminal.

The following uses two call terminals (namely, one call terminal and one peer call terminal) as an example to briefly describe principles of transmitting media streams in processes of separately performing a voice call and a video call between the call terminal and the peer call terminal.

When the call terminal and the peer call terminal perform the voice call, the media stream transmitted between the call terminal and the peer call terminal is a voice stream. After a voice call media transmission channel (which may also be referred to as a voice stream transmission channel for short) is established between the call terminal and the peer call terminal, the voice stream may be transmitted between the call terminal and the peer call terminal based on the voice stream transmission channel. For example, the call terminal sends, to the peer call terminal through the voice stream transmission channel, a voice stream that is of a user corresponding to the call terminal and that is acquired by using a microphone of the call terminal, and the peer call terminal sends, to the call terminal through the voice stream transmission channel, a voice stream that is of a peer user corresponding to the peer call terminal and that is acquired by using a microphone of the peer call terminal.

When the call terminal and the peer call terminal perform the video call, media streams transmitted between the call terminal and the peer call terminal include a voice stream and a video stream, and transmission channels of the voice stream and the video stream are different. Specifically, after a voice call media transmission channel (namely, a voice stream transmission channel) and a video call media transmission channel (which may be referred to as a video stream transmission channel for short) are established, the voice stream may be transmitted between the call terminal and the peer call terminal based on the voice stream transmission channel, and the video stream may be transmitted between the call terminal and the peer call terminal based on the video stream transmission channel. For example, the call terminal sends, to the peer call terminal through the voice stream transmission channel, a voice stream that is of a user corresponding to the call terminal and that is acquired by using a microphone of the call terminal, and the peer call terminal sends, to the call terminal through the voice stream transmission channel, a voice stream that is of a peer user corresponding to the peer call terminal and that is acquired by using a microphone of the peer call terminal; and the call terminal sends, to the peer call terminal through the video stream transmission channel, a video stream that is of the user corresponding to the call terminal and that is acquired by using a camera of the call terminal, and the peer call terminal sends, to the call terminal through the video stream transmission channel, a video stream that is of the peer user corresponding to the peer call terminal and that is acquired by using a camera of the peer call terminal.

With development of communication technologies, to ensure security of a user service, it is very necessary to perform identity authentication on a user in a process in which the user handles the service. Methods for performing identity authentication on the user include password authentication, fingerprint authentication, face recognition authentication, and the like. As an important means of verifying a user identity, the face recognition is increasingly popular. For example, when a user handles a service (for example, a banking service) offline, a face information acquisition device of a service handler acquires a face image of the user, and verifies an identity of the user based on the face image. After the identity of the user is successfully verified, the user may continue to handle the service. For another example, when a user handles a service (for example, handles a service by using a wealth management APP) online by using an application (application, APP) installed on an electronic device held by the user, the APP invokes a camera of the electronic device to acquire a face image of the user, to verify an identity of the user based on the face image. After the identity of the user is successfully verified, the user may continue to handle the service online.

In a scenario in which two users perform a voice call or a video call, if a user needs to perform face recognition on another user to verify a user identity, for example, a user holding the peer call terminal performs face recognition on a user holding the call terminal, an implementation is that a face recognition application (APP) needs to be installed on each of the peer call terminal and the call terminal, and a communication connection is established between the face recognition APP on the call terminal and the face recognition APP on the peer call terminal. In a face recognition process, the call terminal uploads an acquired face video stream (including one or more frames of face images) to the face recognition APP on the call terminal. The face recognition APP performs processing such as face detection, face feature extraction, and face feature comparison (or face detection, face feature extraction, and face feature comparison implemented through interaction between the face recognition APP and a back-end recognition server) based on the face video stream to obtain a face recognition result (where the recognition result may include information indicating that face recognition succeeds or information indicating that face recognition fails). Next, the peer call terminal obtains the face recognition result from the face recognition APP on the call terminal based on the communication connection established between the APP on the peer call terminal and the APP on the call terminal.

When face recognition is performed in a process in which the two users perform the voice call or the video call, a transmission channel dedicated to transmitting the face video stream between the call terminal and the face recognition APP needs to be established, where the transmission channel is different from the voice stream transmission channel and the video stream transmission channel.

It should be understood that, if face recognition is performed between the call terminal and the peer call terminal in a process of the call between the call terminal and the peer call terminal, additional bandwidth resources need to be consumed to establish the transmission channel used to transmit the face video stream, and the call terminal or the peer call terminal also needs to use an additional port to send the face video stream, or receives the face recognition result through the port. For example, in the process in which the call terminal and the peer call terminal perform the voice call, face recognition is performed on the user corresponding to the call terminal, the voice stream is transmitted between the call terminal and the peer call terminal based on the voice stream transmission channel, and the face video stream is transmitted between the call terminal and the face recognition APP based on the transmission channel dedicated to transmitting the face video stream. For another example, in the process in which the call terminal and the peer call terminal performs the video call, face recognition is performed on the user corresponding to the call terminal, the video stream acquired by using a camera is transmitted between the call terminal and the peer call terminal based on a video stream transmission channel, and the face video stream is transmitted between the call terminal and the face recognition APP based on the established transmission channel dedicated to transmitting the face video stream. In conclusion, the additional bandwidth resources need to be occupied to establish the transmission channel dedicated to transmitting the face video stream, and this face recognition method needs to occupy additional port resources of the terminal.

In addition, when face recognition is performed in a process in which the call terminal and the peer call terminal perform a first call, the face recognition APP may not be installed on the call terminal. In this case, the call terminal may need to disconnect the call from the peer call terminal, install the face recognition APP, and after completing the face recognition on the face recognition APP, call the peer call terminal again. The peer call terminal obtains a face recognition result by using the face recognition APP on the peer call terminal, and continues to communicate with the call terminal when the face recognition succeeds. In other words, in the foregoing face recognition process, the call may need to be first interrupted, and the face recognition is then completed. Operations are cumbersome and bring inconvenience to the user.

For a problem in a conventional technology that the additional bandwidth resources need to be occupied to establish the transmission channel dedicated to transmitting the face video stream, and the additional port resources of the terminal need to be occupied, embodiments of this application provide a communication method, apparatus, and system. The communication method may be applied to face recognition in a process of a call between terminals. Specifically, a video call media transmission channel is established through interaction between a call terminal in a communication system and a media server, the video call media transmission channel is used to transmit a call video stream between the call terminal in a video call service and a peer call terminal, and the call video stream includes video content photographed by the call terminal or the peer call terminal. Then, after the peer call terminal applies for face recognition and uniformly performs face recognition on a user corresponding to the call terminal, the call terminal sends a face video stream to the media server through the video call media transmission channel, where the face video stream includes a face image of the user corresponding to the call terminal. Further, the call terminal receives a face recognition result from the media server. According to the technical solutions provided in embodiments of this application, in the process of the call between the call terminal and the peer call terminal, the call terminal may send the face video stream to the media server through the existing video call media transmission channel, additional bandwidth resources do not need to be consumed to establish a transmission channel dedicated to transmitting the face video stream, and additional port resources of the call terminal do not need to be occupied.

Further, compared with an existing communication method, in the technical solution provided in this embodiment of this application, a face recognition APP does not need to be installed on the terminal. In this way, an operator does not need to perform complex related operations, high operation skills are not required for the operator, and a call does not need to be interrupted.

Optionally, the communication method provided in embodiments of this application may be applied to a video conference scenario, a customer service scenario, and the like. The customer service scenario is a scenario of a call between a user and a customer service center (which may also be a customer service system). The call between the user and the customer service center may meet some service requirements of the user. For example, customer service services such as banking, insurance, securities, and mobile communication are all related to the customer service scenario. Usually, the user may call the customer service center, and next establish a call connection with the customer service center. Currently, in actual application, most of customer service processes are as follows: The user calls the customer service center (that is, makes a call), the customer service center first pushes (that is, plays) some prompt content (where the prompt content is pre-stored in the customer service center) to the user after the customer service center makes a response, the user may select a needed service option based on the prompt content, and the customer service center targetedly provides a service for the user based on the service option selected by the user (for example, replies to the service option selected by the user, to resolve a question raised by the user). In addition, the user may alternatively select a manual service based on the pushed prompt content. In this case, a service scenario of a manual customer service is entered. The service scenario of the manual customer service is a scenario in which a user calls an operating staff of the customer service center in a process of this call between the user and the customer service center. To be specific, after the user selects the manual service based on the prompt content pushed by the customer service center, the customer service center continues to call the operating staff of the customer service center (specifically, calls a terminal by using a number of the terminal held by the operating staff). In the following embodiments, the customer service center may be referred to as a customer service or a customer service system for short, and the operating staff of the customer service center may be referred to as a customer service staff for short. The service scenario of the manual customer service is used as an example. The user calls the customer service system by using a call terminal held by the user (which may be referred to as a user call terminal for short). When the call is transferred to the manual service, after the customer service staff makes a response, a call terminal held by the customer service staff (which may be referred to as a customer service call terminal for short) communicates with the user call terminal.

In embodiments of this application, after the customer service call terminal starts to communicate with the user call terminal, the customer service staff may apply for performing face recognition on the user, to perform the communication method provided in embodiments of this application. After face recognition succeeds, the customer service staff provides a service based on a service requirement raised by the user to the customer service staff.

In the customer service scenario, security of some important services can be ensured by performing face recognition on the user, and the face recognition may be completed in an online call process, so that the user does not need to go to a business hall or handle a service offline face to face with a service staff, and the service can be efficiently and conveniently provided for the user.

It can be noted that, in embodiments of this application, the customer service scenario is used as an example to describe the communication method provided in embodiments of this application. It may be understood that, in the customer service scenario, after the user call terminal initiates the call, the customer service system makes a response, and the user selects the manual service, the call terminal held by the user interacts with the terminal held by the customer service staff, to perform face recognition on the user.

Optionally, in embodiments of this application, the call initiated by the user call terminal may be a voice call, or may be a video call.

When the user initiates the voice call, after the customer service of the customer service system makes a response, the user selects a manual service option based on audio prompt content pushed by the media server. Further, the customer service call terminal initiates a face recognition application. Subsequently, when the user corresponding to the user call terminal agrees to perform face recognition, a video stream transmission channel between the user call terminal and the customer service call terminal is established through media resource negotiation, to convert the voice call into a video call. Next, a face video stream including a user face image is transmitted based on the video streaming media transmission channel corresponding to the video call.

When the user initiates the video call, after the customer service system makes a response, the user selects a manual service option based on video prompt content pushed by the media server. Further, the customer service call terminal initiates a face recognition application. Subsequently, when the user corresponding to the user call terminal agrees to perform face recognition, a face video stream including a user face image may be transmitted based on a video stream transmission channel corresponding to the video call.

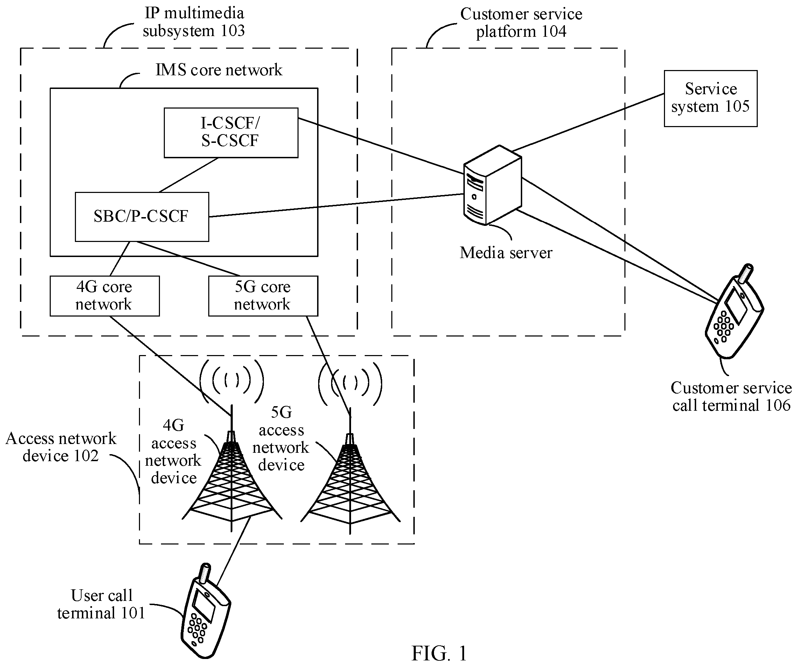

A communication system corresponding to the customer service scenario may be considered as a conference control system. The communication system relates to an access network, an IP multimedia subsystem (namely, an IMS, including a 4G/5G core network and an IMS core network), a customer service platform (which may also be referred to as a customer service system), a service system, and the like. The following describes an architecture of a communication system in a customer service scenario. As shown in FIG. 1, the communication system specifically includes a user call terminal 101, an access network device 102, an IP multimedia subsystem 103, a customer service platform 104, a service system 105, and a customer service call terminal 106. The IP multimedia subsystem 103 includes core networks (which may be a 4G core network and/or a 5G core network) and an IMS core network. It should be understood that a gateway device (for example, an S-GW or a P-GW) is included in the 4G core network, a user plane function (UPF), a mobility management function (AMF), and the like are included in the 5G core network, and a session border controller SBC, a proxy-call session control function P-CSCF, an interrogating-call session control function I-CSCF, and a serving-call session control function S-CSCF are included in the IMS core network. The customer service platform 104 includes a media server.

SBC: configured to provide secure access and media processing.

P-CSCF: is an entry node for the user call terminal to access the IMS core network, and mainly functions as a signaling and message proxy.

I-CSCF: is a unified primary entry node of the IMS core network, and is responsible for assignment and querying the S-CSCF with which a user registers.

S-CSCF: is a central node of the IMS core network, and is mainly used for user registration, authentication control, session routing, service trigger control, and session status information maintenance.

Media server: In this embodiment of this application, in a communication system corresponding to a conventional customer service scenario, the customer service platform 104 includes a control server (which may also be a signaling server) and a media server. Functions of the signaling server mainly include negotiating and processing signaling, and controlling the user call terminal and the customer service call terminal to join or exit a call. Functions of the media server mainly include audio and video processing and playback, application and release of a call site, audio encoding and decoding, video encoding and decoding, and face recognition processing. In some implementations, the functions of the media server and the functions of the control server may be integrated into one server. In this embodiment of this application, an example in which both the functions of the media server and the functions of the control server are integrated into the media server is used to describe the communication method provided in embodiments of this application.

Service system: determines and triggers different service procedures based on a calling party (for example, the user call terminal) and a called number, and different services may include but are not limited to a video call, a video advertisement, and an enterprise video show.

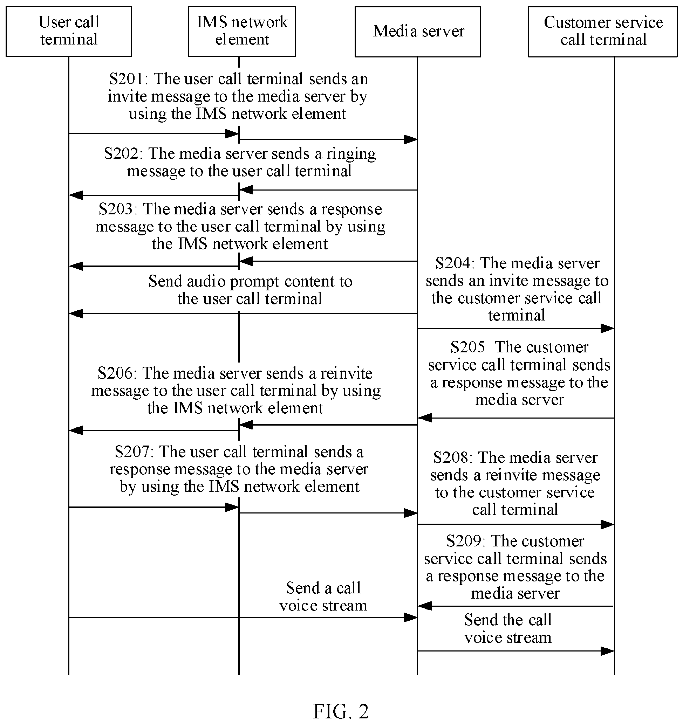

With reference to the architecture of the communication system shown in FIG. 1, on a basis that a user call terminal accesses an access network and establishes a session through a 4G core network or a 5G core network and an IMS core network, a voice call procedure is described by using a voice call as an example, to facilitate understanding of the voice call procedure in a customer service scenario. Refer to FIG. 2. The voice call procedure includes the following steps.

S201: The user call terminal sends an invite (invite) message to a media server by using an IMS network element.

Specifically, with reference to the schematic diagram of the architecture of the communication system shown in FIG. 1, an IMS includes a network element (including a gateway device/a user plane function network element) in the 4G/5G core network, and an SBC/P-CSCF network element and an I-CSCF/S-CSCF network element in the IMS core network. In this embodiment of this application, these network elements in the IMS may be collectively referred to as IMS network elements. That the user call terminal sends an invite message to a media server by using an IMS network element specifically includes: The user call terminal sends the invite message to the media server based on the diagram of the architecture shown in FIG. 1 by sequentially using the network element in the 4G/5G core network, the SBC/P-CSCF network element, and the I-CSCF/S-CSCF network element. It should be noted that the IMS network element is configured to transparently transmit a message between the user call terminal and the media server, and does not process the message.

It can be noted that, in the following embodiments, a message or information sent or received by using the IMS network element is similar to the invite message transmitted by using the IMS network element in S201, and the IMS network element is configured to transparently transmit the message or information. This is not described one by one again in the following embodiments.

It should be understood that, after a user dials an access code of a customer service (which may be understood as a phone number of a customer service system) by using the user call terminal, the user call terminal performs S201. For example, the customer service may be a customer service of a communication carrier or a customer service of an Internet carrier (for example, a customer service corresponding to a banking service or a customer service corresponding to an insurance service). A type of the customer service is not limited in this application.

It can be noted that, a customer service call terminal in this embodiment of this application is a call terminal corresponding to a customer service staff in the customer service system, and the customer service call terminal belongs to a part of the customer service system. It may be understood that, the user calls the customer service system by using the user call terminal, and after the customer service system makes a response, the media server in a customer service platform plays audio prompt content related to a service of the user, to prompt the user to select a corresponding service based on an actual requirement. When the user selects a manual service, the media server in the customer service system continues to call the customer service call terminal. For details, refer to related steps in the following embodiment for understanding.

In this embodiment of this application, the user call terminal sends the invite message through a session initiation protocol (session initiation protocol, SIP), or it may be understood that the invite message is sent through a SIP message. The invite message carries session description protocol (session description protocol, SDP) information of the user call terminal, the SDP information includes address information, audio port information, and an audio encoding and decoding format of the user call terminal, and the SDP information is used to perform media resource negotiation with the media server, to establish a voice call media transmission channel used to transmit a call voice stream between the user call terminal and the media server. In this embodiment of this application, the address information of this device may be an IP address of this device.

S202: The media server sends a ringing message to the user call terminal.

The ringing message indicates that a customer service phone dialed by the user is being connected. In this case, the user call terminal is in an alerting state of waiting for a response (that is, off-hook) from the customer service system. The ringing message may be an 18* series message, for example, a 181 message (that is, call being forwarded, for indicating that a call is being forwarded) or a 183 message (for prompting a progress of establishing a dialog). The ringing message carries SDP information of the media server, including an IP address, audio port information, and an audio encoding and decoding format of the media server, and the SDP information is used to perform media resource negotiation with the user call terminal, to establish the voice call media transmission channel used to transmit the call voice stream between the user call terminal and the media server.

S203: The media server sends a response message to the user call terminal by using the IMS network element.

It should be understood that, after the media server sends the ringing message to the user call terminal, the user call terminal waits for a response from the customer service system (that is, waits for connection). In this process, the user may hear a waiting tone, namely, a beep tone, or may hear a ring back tone. After the customer service system makes the response, the call is connected, and the media server performs S203.

Similarly, the IMS network element is configured to transparently transmit the response message.

In this embodiment of this application, after the customer service system makes the response to the call from the user call terminal, the media server may play the audio prompt content related to the service of the user. Specifically, the media server sends the audio prompt content to the user call terminal based on the established voice call media transmission channel, where the audio prompt content may prompt the user to select different service content based on a requirement. For example, if the voice call is a voice call in a scenario in which the user calls the communication carrier, the audio prompt content may include:
press "1" for balance and traffic query, press "2" for a broadband service, press "3" for a recharge service, press "4" for service query and handling, press "5" for a password service, press "6" for a corporate service, press "0" for a manual service, and so on. Optionally, the audio prompt content may alternatively be content such as an advertisement or a promotion. The audio prompt content is related to a specific application scenario. The audio prompt content is not limited in this application.

When the user performs an operation under the prompt of the audio prompt content and selects the manual service, after the media server detects the operation of selecting the manual service, the media server allocates a customer service staff to the user (that is, selects a corresponding customer service call terminal for the user call terminal), and the media server next performs the following S204.

S204: The media server sends an invite (invite) message to the customer service call terminal.

The invite message is used to call a voice call between the customer service call terminal and the user call terminal, the invite message includes the SDP information of the media server, and the SDP information of the media server includes the IP address, the audio port information, and the audio encoding and decoding format of the media server. The SDP information is used to perform media resource negotiation with the customer service call terminal, to establish the voice call media transmission channel used to transmit the call voice stream between the customer service call terminal and the media server.

S205: The customer service call terminal sends a response message to the media server.

After the customer service call terminal sends the response message, the customer service call terminal joins the call with the user call terminal, where the response message includes SDP information of the customer service call terminal, and the SDP information of the customer service call terminal includes an IP address, audio port information, and an audio encoding and decoding format of the customer service call terminal. The SDP information is used to perform media resource negotiation with the media server, to establish the voice call media transmission channel used to transmit the call voice stream between the customer service call terminal and the media server.

It should be understood that, because the customer service call terminal is a new device communicating with the user call terminal in the customer service system, in a subsequent procedure, to implement the communication between the user call terminal and the customer service call terminal, media resource negotiation needs to be performed again. To be specific, media resource renegotiation is performed between the media server and the user call terminal (refer to S206 and S207), and media resource renegotiation is performed between the media server and the customer service call terminal (refer to S208 and S209). A voice stream transmission channel (namely, a voice call media transmission channel) may be established through the media resource renegotiation. It should be noted that, the voice call media transmission channel established in S206 to S209 is a transmission channel that requires the media server as a medium, namely, an indirect voice call media transmission channel. The voice call media transmission channel includes the voice call media transmission channel between the user call terminal and the media server, and the voice call media transmission channel between the media server and the customer service call terminal.

S206: The media server sends a reinvite (reinvite) message to the user call terminal by using the IMS network element.

The reinvite message is used to perform media resource renegotiation with the user call terminal, to establish a voice call media transmission channel between the user call terminal and the media server. The reinvite message includes SDP information of the media server, and the SDP information of the media server includes an IP address, audio port information, and an audio encoding and decoding format of the media server.

S207: The user call terminal sends a response message to the media server by using the IMS network element.

The response message includes SDP information of the user call terminal, and the SDP information of the user call terminal includes an IP address, audio port information, and an audio encoding and decoding format of the user call terminal.

Through a media resource negotiation process described in S206 and S207, the user call terminal may obtain the SDP information of the media server, and the media server may also obtain the SDP information of the user call terminal. In this way, the voice call media transmission channel between the user call terminal and the media server is established.

S208: The media server sends a reinvite (reinvite) message to the customer service call terminal.

The reinvite message is used to perform media resource renegotiation with the customer service call terminal, to establish a voice call media transmission channel between the customer service call terminal and the media server. The reinvite message includes SDP information of the media server, and the SDP information of the media server includes an IP address, audio port information, and an audio encoding and decoding format of the media server.

S209: The customer service call terminal sends a response message to the media server.

The response message includes SDP information of the customer service call terminal, and the SDP information of the customer service call terminal includes an IP address, audio port information, and an audio encoding and decoding format of the customer service call terminal.

Through a media resource negotiation process described in S208 and S209, the customer service call terminal may obtain the SDP information of the media server, and the media server may also obtain the SDP information of the customer service call terminal. In this way, the voice call media transmission channel between the customer service call terminal and the media server is established.

It should be understood that, through the voice call media transmission channels (including the voice call media transmission channel between the user call terminal and the media server, and the voice call media transmission channel between the customer service call terminal and the media server) established in S206 to S209, the voice call media transmission channels are used to transmit the call voice stream between the customer service call terminal and the user call terminal. For example, based on the established voice call media transmission channels, when the user call terminal sends the call voice stream to the customer service call terminal, the user call terminal sends the call voice stream to the media server based on the voice call media transmission channel between the user call terminal and the media server, and the media server next sends the received call voice stream to the customer service call terminal based on the voice call media transmission channel between the media server and the customer service call terminal.

Optionally, in some cases, a direct voice call media transmission channel used to transmit the call voice stream between the user call terminal and the customer service call terminal may alternatively be established through media resource negotiation. It should be noted that, the direct voice call media transmission channel used to transmit the call voice stream between the user call terminal and the customer service call terminal is a channel that does not require the media server as a transit device, and is not necessarily a direct connection channel between the user call terminal and the customer service call terminal. In this case, S206 to S209 may be replaced with S206' to S210'.

S206': The media server sends a reinvite (reinvite) message to the user call terminal by using the IMS network element.

The reinvite message is used to perform media resource renegotiation with the user call terminal, and the reinvite message includes SDP information of the media server, and the SDP information of the media server includes an IP address, audio port information, and an audio encoding and decoding format of the media server.

S207': The user call terminal sends a response message to the media server by using the IMS network element.

The response message includes SDP information of the user call terminal, and the SDP information of the user call terminal includes an IP address, audio port information, and an audio encoding and decoding format of the user call terminal.

S208': The media server sends a reinvite (reinvite) message to the customer service call terminal.

The reinvite message is used to perform media resource renegotiation with the customer service call terminal, the reinvite message includes SDP information of the user call terminal, and the SDP information of the user call terminal includes an IP address, audio port information, and an audio encoding and decoding format of the user call terminal.

S209': The customer service call terminal sends a response message to the media server.

The response message includes SDP information of the customer service call terminal, and the SDP information of the customer service call terminal includes an IP address, audio port information, and an audio encoding and decoding format of the customer service call terminal.

S210': The media server sends, to the user call terminal, a response message carrying the SDP information of the customer service call terminal.

Through a media resource negotiation process in S206' to S210', the user call terminal may obtain the SDP information of the customer service call terminal, and the customer service call terminal may obtain the SDP information of the user call terminal. That is, the voice call media transmission channel between the user call terminal and the customer service call terminal is established. Based on the established voice call media transmission channel, the user call terminal and the customer service call terminal may directly communicate with each other, and the media server does not need to forward the call voice stream. For example, the user call terminal may directly send the call voice stream to the customer service call terminal based on the voice call media transmission channel between the user call terminal and the media server. Similarly, the customer service call terminal may also directly send the call voice stream to the user call terminal based on the voice call media transmission channel.

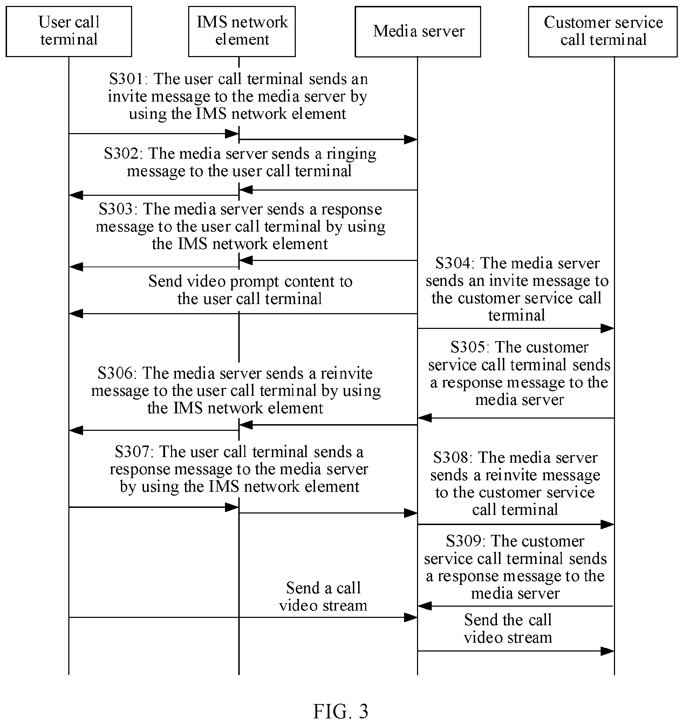

With reference to the architecture of the communication system shown in FIG. 1, on a basis that a user call terminal accesses an access network and a 4G core network or a 5G core network, and an IMS core network, a video call procedure is described by using a video call as an example, to facilitate understanding of the video call procedure in a customer service scenario. The video call procedure is similar to the foregoing voice call procedure. For related content in the video call procedure, refer to descriptions in the voice call procedure. Refer to FIG. 3. The video call procedure includes the following steps.

S301: The user call terminal sends an invite (invite) message to a media server by using an IMS network element.

The invite message carries SDP information of the user call terminal, the SDP information includes an IP address, audio port information, an audio encoding and decoding format, video port information, and a video encoding and decoding format of the user call terminal, and the SDP information is used to perform media resource negotiation with the media server, to establish a voice call media transmission channel used to transmit a call voice stream and a video call media transmission channel used to transmit a call video stream between the user call terminal and the media server. It should be understood that, transmission of the call voice stream and the transmission of the call video stream are related to a video call process. Therefore, in comparison with an audio call process, the SDP information in the video call process further needs to include the video port information and the video encoding and decoding format.

S302: The media server sends a ringing message to the user call terminal.

The ringing message carries SDP information of the media server, including an IP address, audio port information, an audio encoding and decoding format, video port information, and a video encoding and decoding format of the media server, and the SDP information is used to perform media resource negotiation with the user call terminal, to establish a voice call media transmission channel used to transmit the call voice stream and a video call media transmission channel used to transmit the call video stream between the user call terminal and the media server.

S303: The media server sends a response message to the user call terminal by using the IMS network element.

In this embodiment of this application, when a user initiates the video call, after a customer service system makes a response to the call from the user call terminal, the media server may play video prompt content related to a service of the user. Specifically, the media server sends the video prompt content to the user call terminal through the established voice call media transmission channel and video call media transmission channel, where the video prompt content may prompt the user to select different service content based on a requirement.

When the user performs an operation under the prompt of the video prompt content and selects a manual service, after the media server detects the operation of selecting the manual service, the media server allocates a customer service staff to the user (that is, selects a corresponding customer service call terminal for the user call terminal), and the media server next performs the following S304.

S304: The media server sends an invite (invite) message to the customer service call terminal.

The invite message is used to call a video session between the customer service call terminal and the user call terminal, the invite message includes SDP information of the media server, and the SDP information of the media server includes an IP address, audio port information, an audio encoding and decoding format, video port information, and a video encoding and decoding format of the media server. The SDP information is used to perform media resource negotiation with the customer service call terminal, to establish a voice call media transmission channel used to transmit the call voice stream and a video call media transmission channel used to transmit the call video stream between the customer service call terminal and the media server.

S305: The customer service call terminal sends a response message to the media server.

After the customer service call terminal sends the response message, the customer service call terminal joins the video call with the user call terminal, where the response message includes SDP information of the customer service call terminal, and the SDP information of the customer service call terminal includes an IP address, audio port information, an audio encoding and decoding format, video port information, and a video encoding and decoding format of the customer service call terminal. The SDP information is used to perform media resource negotiation with the media server, to establish a voice call media transmission channel used to transmit the call voice stream and a video call media transmission channel used to transmit the call video stream between the customer service call terminal and the media server.

It should be understood that, because the customer service call terminal is a new device communicating with the user call terminal in the customer service system, in a subsequent procedure, to implement the communication between the user call terminal and the customer service call terminal, media resource negotiation needs to be performed again. To be specific, media resource renegotiation is performed between the media server and the user call terminal (refer to S306 and S307), and media resource renegotiation is performed between the media server and the customer service call terminal (refer to S308 and S309). A voice call media transmission channel and a video call media transmission channel may be established through the media resource renegotiation. It should be noted that, the voice call media transmission channel and the video call media transmission channel established in S306 to S309 are transmission channels that require the media server as a media, namely, an indirect voice call media transmission channel and an indirect video call media transmission channel. The voice call media transmission channel includes the voice call media transmission channel between the user call terminal and the media server, and the voice call media transmission channel between the media server and the customer service call terminal, and the video call media transmission channel includes the video call media transmission channel between the user call terminal and the media server, and the video call media transmission channel between the media server and the customer service call terminal.

S306: The media server sends a reinvite (reinvite) message to the user call terminal by using the IMS network element.

The reinvite message is used to perform media resource renegotiation with the user call terminal, to establish a voice call media transmission channel between the user call terminal and the media server, and a video call media transmission channel between the user call terminal and the media server. The reinvite message includes SDP information of the media server, and the SDP information of the media server includes an IP address, audio port information, an audio encoding decoding format, video port information, and a video encoding decoding format of the media server.

S307: The user call terminal sends a response message to the media server by using the IMS network element.

The response message includes SDP information of the user call terminal, and the SDP information of the user call terminal includes an IP address, audio port information, an audio encoding and decoding format, video port information, and a video encoding and decoding format of the user call terminal.

Through a media resource negotiation process described in S306 and S307, the user call terminal may obtain the SDP information of the media server, and the media server may also obtain the SDP information of the user call terminal. In this way. In this way, the voice call media transmission channel between the user call terminal and the media server, and the video call media transmission channel between the user call terminal and the media server are established.

S308: The media server sends a reinvite (reinvite) message to the customer service call terminal.

The reinvite message is used to perform media resource renegotiation with the customer service call terminal, to establish a voice call media transmission channel between the customer service call terminal and the media server, and a video call media transmission channel between the customer service call terminal and the media server. The reinvite message includes SDP information of the media server, and the SDP information of the media server includes an IP address, audio port information, an audio encoding decoding format, video port information, and a video encoding decoding format of the media server.

S309: The customer service call terminal sends a response message to the media server.

The response message includes SDP information of the customer service call terminal, and the SDP information of the customer service call terminal includes an IP address, audio port information, an audio encoding and decoding format, video port information, and a video encoding and decoding format of the customer service call terminal.

Through a media resource negotiation process described in S308 and S309, the customer service call terminal may obtain the SDP information of the media server, and the media server may also obtain the SDP information of the customer service call terminal. In this way. In this way, the voice call media transmission channel between the customer service call terminal and the media server, and the video call media transmission channel between the customer service call terminal and the media server are established.

It should be understood that, through the voice call media transmission channels (including the voice call media transmission channel between the user call terminal and the media server, and the voice call media transmission channel between the customer service call terminal and the media server) established in S306 to S309, the voice call media transmission channels are used to transmit the call voice stream between the customer service call terminal and the user call terminal; and through the video call media transmission channels (including the video call media transmission channel between the user call terminal and the media server, and the video call media transmission channel between the customer service call terminal and the media server) established in S306 to S309, the video call media transmission channels are used to transmit the call video stream between the customer service call terminal and the user call terminal.

This is similar to a voice call process. Optionally, in some cases, a direct voice call media transmission channel used to transmit the call voice stream and a direct video call media transmission channel used to transmit the call video stream may alternatively be established between the user call terminal and the customer service call terminal through media resource negotiation. In this case, S306 to S309 may be replaced with S306' to S310'.

S306': The media server sends a reinvite (reinvite) message to the user call terminal by using the IMS network element.

The reinvite message is used to perform media resource renegotiation with the user call terminal, the reinvite message includes SDP information of the media server, and the SDP information of the media server includes an IP address, audio port information, an audio encoding and decoding format, video port information, and a video encoding and decoding format of the media server.

S307': The user call terminal sends a response message to the media server by using the IMS network element.

The response message includes SDP information of the user call terminal, and the SDP information of the user call terminal includes an IP address, audio port information, an audio encoding and decoding format, video port information, and a video encoding and decoding format of the user call terminal.

S308': The media server sends a reinvite (reinvite) message to the customer service call terminal.

The reinvite message is used to perform media resource renegotiation with the customer service call terminal, the reinvite message includes SDP information of the user call terminal, and the SDP information of the user call terminal includes an IP address, audio port information, audio encoding and decoding format, video port information, and a video encoding and decoding format of the user call terminal.

S309': The customer service call terminal sends a response message to the media server.

The response message includes SDP information of the customer service call terminal, and the SDP information of the customer service call terminal includes an IP address, audio port information, an audio encoding and decoding format, video port information, and a video encoding and decoding format of the customer service call terminal.

S310': The media server sends, to the user call terminal, a response message carrying the SDP information of the customer service call terminal.

In conclusion, different from a voice call procedure, each piece of SDP information in the media negotiation process includes the video port information and the video encoding and decoding format of the device.

Through a media resource negotiation process in S306' to S310', the user call terminal may obtain the SDP information of the customer service call terminal, and the customer service call terminal may obtain the SDP information of the user call terminal. That is, the direct voice call media transmission channel and video call media transmission channel between the user call terminal and the customer service call terminal are established. Based on the established direct voice call media transmission channel and video call media transmission channel, when the user call terminal communicates with the customer service call terminal, the media server does not need to forward the call voice stream and the call video stream.

Optionally, the user call terminal is a call terminal, and the customer service call terminal is a peer call terminal; or the customer service call terminal is a call terminal, and the user call terminal is a peer call terminal. This is specifically determined based on an actual situation, and is not limited in this embodiment of this application.

In this embodiment of this application, the call terminals (the call terminal and the peer call terminal) may be electronic devices such as mobile phones, tablet computers, or personal computers (Ultra-mobile Personal Computers, UMPCs); or may be other electronic devices such as desktop devices, laptop devices, handheld devices, wearable devices, smart home devices, or in-vehicle devices, for example, netbooks, smartwatches, smart cameras, or personal digital assistants (Personal Digital Assistants, PDAs). A specific type, a structure, and the like of the call terminal are not limited in this embodiment of this application.

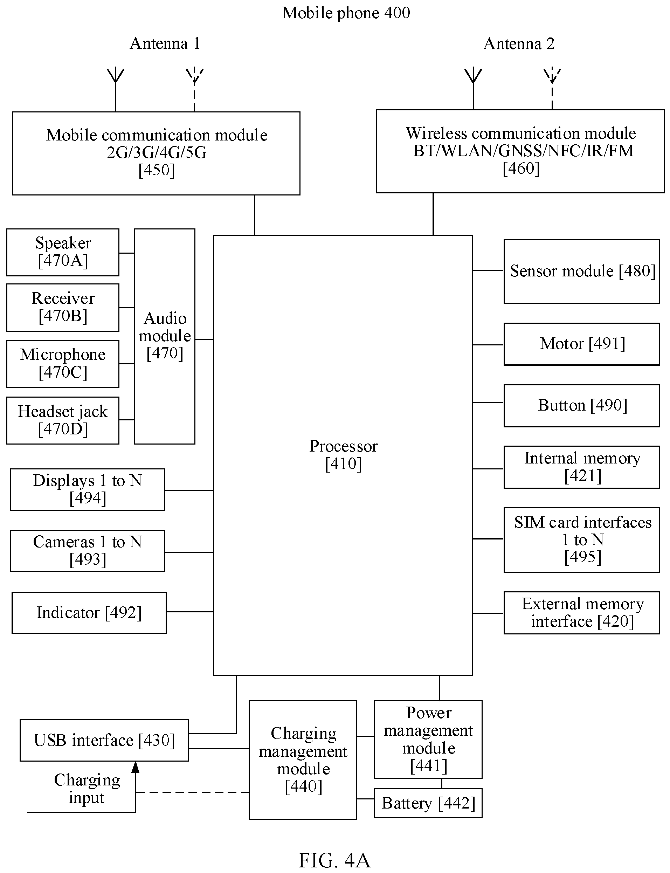

An example in which a call terminal is a mobile phone is used. FIG. 4A is a schematic diagram of a hardware structure of a mobile phone 400 according to an embodiment of this application. The mobile phone 400 includes a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identity module (subscriber identity module, SIM) card interface 495, and the like.

It may be understood that, the structure shown in this embodiment of this application does not constitute a specific limitation on the mobile phone 400. In some other embodiments of this application, the mobile phone 400 may include more or fewer components than those shown in the figure, or combine some components, or split some components, or have different component arrangements. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the mobile phone 400. The controller may generate an operation control signal based on an instruction operation code and a time sequence signal, to complete control of instruction reading and instruction execution.

A memory may be disposed in the processor 410, and is configured to store an instruction and data. In some embodiments, the memory in the processor 410 is a cache. The memory may store instructions or data that has just been used or is cyclically used by the processor 410. If the processor 410 needs to use the instructions or the data again, the processor 410 may directly invoke the instructions or the data from the memory. Therefore, repeated access is avoided, and waiting time of the processor 410 is reduced, thereby improving system efficiency.

The charging management module 440 is configured to receive a charging input from a charger. When charging the battery 442, the charging management module 440 may further supply power to the electronic device by using the power management module 441.

The power management module 441 is configured to connect the battery 442, the charging management module 440, and the processor 410. The power management module 441 receives an input from the battery 442 and/or the charging management module 440, and supplies power to the processor 410, the internal memory 421, the external memory, the display 494, the camera 493, the wireless communication module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same device.

A wireless communication function of the mobile phone 400 may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal.

The mobile communication module 450 may provide a solution, applied to the mobile phone 400, for wireless communication, including 2G/3G/4G/5G or the like. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal modulated by the modem processor, and convert the signal into an electromagnetic wave for radiation through the antenna 1. In some embodiments, at least some functional modules of the mobile communication module 450 may be disposed in the processor 410. In some embodiments, at least some functional modules of the mobile communication module 450 and at least some modules of the processor 410 may be disposed in a same device.

The wireless communication module 460 may provide a solution, applied to the mobile phone 400, for wireless communication, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 460 may be one or more devices integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert the signal into an electromagnetic wave for radiation over the antenna 2.

In some embodiments, the antenna 1 of the mobile phone 400 is coupled to the mobile communication module 450, and the antenna 2 is coupled to the wireless communication module 460, so that the mobile phone 400 can communicate with a network and another device by using a wireless communication technology.

The mobile phone 400 implements a display function by using the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone 400 may include one or N displays 494, and N is a positive integer greater than 1.

The mobile phone 400 may implement a photographing function by using the ISP, the camera 493, the video codec, the GPU, the display 494, the application processor, and the like.

The ISP is configured to process data fed back by the camera 493, and the camera 493 is configured to capture a static image or a video.

The digital signal processor is configured to process a digital signal, and may process another digital signal (for example, an audio signal) in addition to a digital image signal.

The video codec is configured to compress or decompress a digital video. The mobile phone 400 may support one or more video codecs. In this way, the mobile phone 400 may play or record videos in a plurality of encoding formats, for example, moving picture experts group (moving picture experts group, MPEG)-1, MPEG-2, MPEG-3 and MPEG-4.

The external memory interface 420 may be configured to connect to an external memory card, for example, a micro SD card, to extend a storage capability of the mobile phone 400. The external storage card communicates with the processor 410 through the external memory interface 420, to implement a data storage function. For example, files such as music and videos are stored in the external storage card.

The internal memory 421 may be configured to store computer-executable program code, where the computer-executable program code includes instructions. The processor 410 executes various functional applications of the mobile phone 400 and data processing by running instructions stored in the internal memory 421. The internal memory 421 may include a program storage area and a data storage area. The program storage area may store an operating system, an application required by at least one function (for example, a sound playback function or an image playback function), and the like. The data storage area may store data (such as audio data and a phone book) and the like created during use of the mobile phone 400. In addition, the internal memory 421 may include a high-speed random access memory, or may include a non-volatile memory, for example, at least one magnetic disk memory, a flash memory, or a universal flash storage (universal flash storage, UFS).

The mobile phone 400 may implement an audio function such as music playback or recording by using the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may further be configured to encode and decode an audio signal. In some embodiments, the audio module 470 may be disposed in the processor 410, or some functional modules of the audio module 470 may be disposed in the processor 410.

The speaker 470A, also referred to as a "loudspeaker", is configured to convert an audio electrical signal into a sound signal. The mobile phone 400 may listen to music or answer a hands-free call by using the speaker 470A.

The receiver 470B, also referred to as an "earpiece", is configured to convert an audio electrical signal into a sound signal. When a call is answered or voice information is received by using the mobile phone 400, the receiver 470B may be put close to a human ear to listen to a voice.

The microphone 470C, also referred to as a "mike" or a "mic", is configured to convert a sound signal into an electrical signal. When making a call or sending voice information, the user may make a sound near the microphone 470C through the mouth, to input a sound signal to the microphone 470C. At least one microphone 470C may be disposed in the mobile phone 400. In some other embodiments, two microphones 470C may be disposed in the mobile phone 400, to acquire a sound signal and further implement a noise reduction function. In some other embodiments, three, four, or more microphones 470C may alternatively be disposed in the mobile phone 400, to acquire a sound signal, reduce noise, further identify a sound source, to implement a directional recording function, and the like.

The headset jack 470D is configured to connect to a wired headset.

The button 490 includes a power button, a volume button, and the like. The mobile phone 400 may receive a button input, and generate a button signal input related to a user setting and function control of the mobile phone 400.

The motor 491 may generate a vibration prompt. The motor 491 may be configured to provide an incoming call vibration prompt and touch vibration feedback.

The indicator 492 may be an indicator light, and may be configured to indicate a charging status and a power change, or may be configured to indicate a message, a missed call, a notification, and the like.

The SIM card interface 495 is configured to connect to a SIM card. The SIM card may be inserted into the SIM card interface 495 or removed from the SIM card interface 495, to implement contact with or separation from the mobile phone 400.

It may be understood that, in this embodiment of this application, the mobile phone 400 may perform some or all of steps in embodiments of this application. These steps or operations are merely examples. The mobile phone 400 may further perform other operations or variations of various operations. In addition, the steps may be performed in a sequence different from a sequence presented in embodiments of this application, and not all the operations in embodiments of this application may need to be performed. Embodiments of this application may be separately implemented, or may be implemented in any combination. This is not limited in this application.

The communication method provided in embodiments of this application may be used in the call terminal having the hardware structure shown in FIG. 4A or a call terminal having a similar structure; or may be used in a call terminal having another structure. This is not limited in this embodiment of this application.

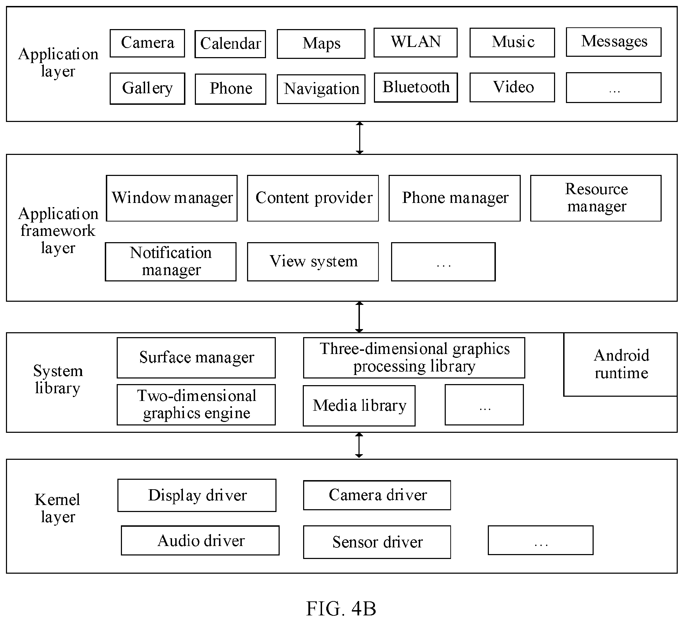

After the hardware structure of the call terminal is described, an example in which the call terminal is the mobile phone 400 is used herein in this application to describe a system architecture of the call terminal provided in this application. The system architecture of the mobile phone 400 may use a layered architecture, an event-driven architecture, a microkernel architecture, a microservice architecture, or a cloud architecture. In an embodiment of this application, an Android^{®} system of the hierarchical architecture is used as an example to describe a software structure of the mobile phone 400. FIG. 4B is a block diagram of a software structure of a call terminal according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 4B, the application packages may include applications such as Camera, Gallery, Calendar, Phone, Maps, Navigation, WLAN, Bluetooth, Music, Video, and Messages.

In this embodiment of this application, a call application (namely, a call APP) at an application layer of the mobile phone 400 may be configured to perform a voice call or a video call with another call terminal. The call application is an application that is already provided in the mobile phone 400 before delivery, and does not need to be installed, configured, and the like by a user.

It should be understood that, in the communication method provided in embodiments of this application, a face recognition function implemented between the call terminal and a peer call terminal in a voice call or video call process is implemented based on call applications on the call terminal and the peer call terminal. It may also be considered that, the call terminal and the peer call terminal in this embodiment of this application are specifically the call applications on the call terminal and the peer call terminal.

The application framework layer provides an application programming interface (application programming interface, API) and a programming framework for the application at the application layer. The application framework layer includes some predefined functions.

As shown in FIG. 4B, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like. The content provider is configured to: store and obtain data, and enable the data to be accessed by an application. The data may include a video, an image, audio, calls that are made and answered, a browsing history and bookmarks, an address book, and the like. The view system includes visual controls such as a control for displaying text and a control for displaying an image. The view system may be configured to construct an application. A display interface may include one or more views. For example, a display interface including an SMS message notification icon may include a text display view and an image display view. The phone manager is used to provide a communication function of the call terminal, for example, management of a call status (including answering, hanging up, and the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a chart or a scroll bar text, for example, a notification of an application running in a background, or may be a notification that appears on the screen in a form of a dialog window. For example, text information is displayed in the status bar, an announcement is produced, the electronic device vibrates, or the indicator light blinks.

The Android runtime includes a core library and a virtual machine. The Android runtime is responsible for scheduling and managing the Android system.

The kernel library includes two parts: a function that needs to be called in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications. The media library supports playback and recording in a plurality of commonly used audio and video formats, static image files, and the like. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the mobile phone 400 with reference to a scenario in which capturing and photographing are performed.

When a touch sensor of the mobile phone 400 receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a single-tap operation and a control corresponding to the single-tap operation is a control of a camera application icon is used. A camera application invokes an interface at the application framework layer to enable the camera application, then enables the camera driver by invoking the kernel layer, and captures a static image or a video by using the camera 493.

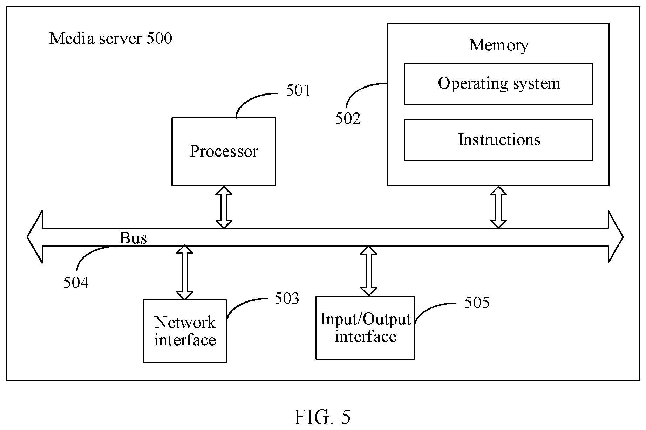

In this embodiment of this application, the media server in the communication system may be a server in a hardware form, or may be a server in a software form. The server in the hardware form is used as an example. As shown in FIG. 5, an embodiment of this application provides a media server 500. The media server 500 includes at least one processor 501 and a memory 502.

The processor 501 includes one or more central processing units (central processing units, CPUs). The CPU is a single-CPU (single-CPU) or a multi-CPU (multi-CPU).

The memory 502 includes but is not limited to a random access memory (random access memory, RAM), a read-only memory (read-only memory, ROM), an erasable programmable read-only memory (erasable programmable read-only memory, EPROM), a flash memory, or an optical memory. The memory 502 stores code of an operating system.

Optionally, the processor 501 implements the method in the foregoing embodiment by reading instructions stored in the memory 502, or the processor 501 implements the method in the foregoing embodiments by using internally stored instructions. When the processor 501 implements the method in the foregoing embodiment by reading the instructions stored in the memory 502, the memory 502 stores instructions for implementing the communication method provided in embodiments of this application.

After program code stored in the memory 502 is read by the at least one processor 501, the media server 500 performs the following operations: triggering establishment of a video call media transmission channel, where the video call media transmission channel is used to transmit a call video stream, and the call video stream includes video content photographed by a call terminal; and receiving a face recognition application, receiving a face video stream through the video call media transmission channel, and returning a face recognition result to the call terminal and a peer call terminal.

Optionally, the media server 500 shown in FIG. 5 further includes a network interface 503. The network interface 503 is a wired interface, for example, a fiber distributed data interface (fiber distributed data interface, FDDI) or a gigabit Ethernet (gigabit Ethernet, GE) interface. Alternatively, the network interface 503 is a wireless interface. The network interface 503 is configured to receive a message (for example, a SIP message). Alternatively, the network interface 503 is configured to receive a call video stream or a call voice stream.

The memory 502 is configured to store an audio stream or a video stream received by the network interface 503, and the at least one processor 501 further performs, based on these pieces of information stored in the memory 502, the method described in the foregoing method embodiments. For more details of implementing the foregoing functions by the processor 501, refer to the descriptions in the foregoing method embodiments. Details are not described herein again.

Optionally, the media server 500 further includes a bus 504. The processor 501 and the memory 502 are usually connected to each other through the bus 504, or are connected to each other in another manner.

Optionally, the media server 500 further includes an input/output interface 505. The input/output interface 505 is configured to: connect to an input device, and receive an instruction input by a user by using the input device. The input device includes but is not limited to a keyboard, a touchscreen, and a microphone. The input/output interface 505 is further configured to: connect to an output device, and output a processing result of the processor 501. The output device includes but is not limited to a display and a printer.

With reference to the related descriptions of the foregoing embodiments, an embodiment of this application provides a communication method. The method may be applied to a call terminal (including the call terminal and a peer call terminal of the call terminal) having the hardware structure shown in FIG. 4A and the system architecture shown in FIG. 4B and the media server having the hardware structure shown in FIG. 5 in a communication system for implementation, and the communication method is implemented through interaction between devices.

In a customer service scenario, a device that initiates a call is a user call terminal, and a called device is a terminal of a customer service system. In this embodiment of this application, face recognition needs to be performed on a user corresponding to the user call terminal. That is, the user call terminal corresponds to a call terminal in the following embodiments, and the terminal of the customer service system (for example, a customer service call terminal) is a peer call terminal.

Based on content in the foregoing embodiments, it can be learned that, in the customer service scenario, a face recognition process occurs in a manual service phase, that is, customer service staff participates in the call (that is, the customer service call terminal held by the customer service staff participates in the call).

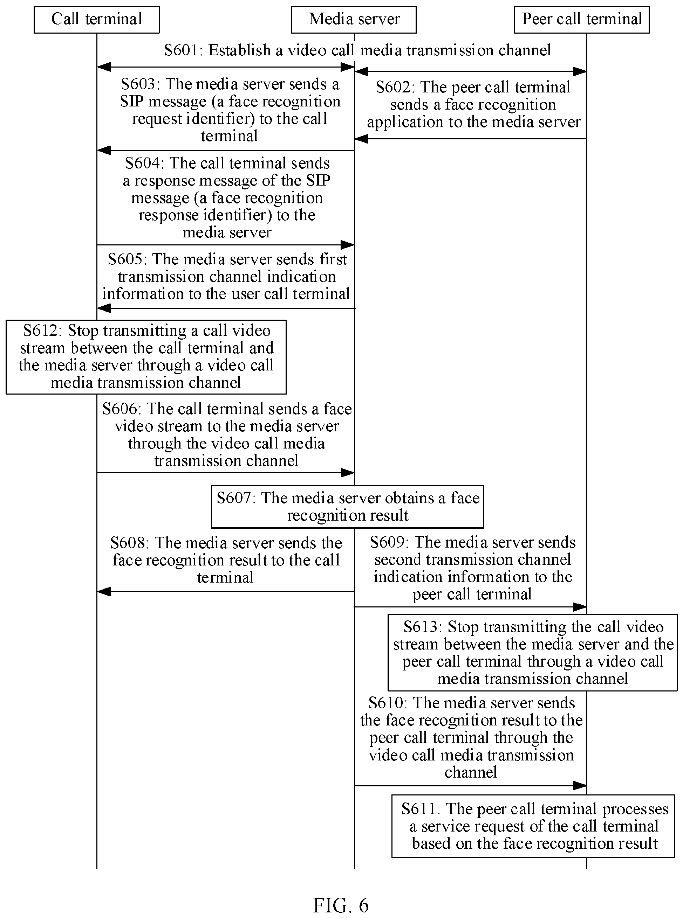

The following describes in detail a communication method provided in an embodiment of this application. As shown in FIG. 6, the communication method provided in this embodiment of this application includes the following steps.

S601: Establish a video call media transmission channel.

In this embodiment of this application, when a customer service staff participates in a call, the video call media transmission channel is established through interaction among a call terminal, a media server, and a peer call terminal. The video call media transmission channel is used to transmit a call video stream between the call terminal and the peer call terminal in a video call service, and the call video stream includes video content photographed by the call terminal or the peer call terminal. It should be understood that, in this embodiment of this application, the call terminal and the peer call terminal are relative concepts. In two terminals participating in a call, any terminal may be a call terminal, and the other terminal is a peer call terminal.

It can be noted that, in this embodiment of this application, the video call media transmission channel established through participation among the call terminal, the peer call terminal, and the media server is an indirect video call media transmission channel. The establishing a video call media transmission channel specifically includes: establishing a first video call media transmission channel, and establishing a second video call media transmission channel, where the first video call media transmission channel is a video call media transmission channel between the call terminal and the media server, and the second video call media transmission channel is a video call media transmission channel between the peer call terminal and the media server.

In this embodiment of this application, for a process of establishing a video call media transmission channel, refer to the descriptions of S206 to S209 in the foregoing embodiment. Details are not described herein again.

S602: The peer call terminal sends a face recognition application to the media server. Correspondingly, the media server receives the face recognition application sent by the peer call terminal.

The face recognition application includes a face recognition application identifier, and the face recognition application identifier is used to apply for performing face recognition on a user corresponding to the call terminal, that is, performing face recognition on the call terminal in a process of the call between the call terminal and the peer call terminal.

Similarly, optionally, if a calling party (namely, the call terminal) initiates a video call, after the call terminal selects a manual service based on video prompt content, the media server in a customer service system calls the peer call terminal, and after the peer call terminal makes a response, a video call media transmission channel is established through interaction among the call terminal, the peer call terminal, and the media server.

Optionally, if the calling party initiates a voice call, after the call terminal selects the manual service based on audio prompt content, the media server in the customer service system calls the peer call terminal, and after the peer call terminal makes a response, a voice call media transmission channel is established through interaction among the call terminal, the peer call terminal, and the media server. After the media server receives the face recognition application, a video call media transmission channel is established through interaction among the call terminal, the peer call terminal, and the media server.

S603: The media server sends a SIP message to the call terminal, where the SIP message includes the face recognition request identifier, and the face recognition request identifier is for requesting to perform face recognition on the user corresponding to the call terminal. Correspondingly, the call terminal receives the SIP message from the media server.

S604: The call terminal sends a response message of the SIP message to the media server, where the response message of the SIP message indicates that the user corresponding to the call terminal agrees to perform face recognition.

Specifically, the response message of the SIP message includes a face recognition response identifier, and the face recognition response identifier indicates that the user corresponding to the call terminal agrees to perform face recognition.

In this embodiment of this application, the face recognition request identifier in the SIP message may be carried in a header field of the SIP message.

Optionally, the face recognition request identifier may be carried in the header field of the SIP message in the following two manners.

First carrying manner: The face recognition request identifier (donated as FR) is carried in a Contact extended field of the SIP message.

INVITE sip:02033296999@gd.ctcims.cn SIP/2.0 is used as an example.

A Contact header field is:
<sip:172.27.10.10:5060;transport=udp;zte-did=26-3-20481-3629-12-890-3302;zte-uid=200001+861892222222;Hpt=8e48_16;CxtId=4;TRC=ffffffff-ffffffff>;audio;video;FR;+g.3gpp.mid-call;+g.3gpp.srvcc-alerting;+g.3gpp.ps2cs-srvcc-orig-pre-alerting;+g.3gpp.icsi-ref="urn%3Aurn-7%3A3gpp-service.ims.icsi.mmtel";
Max-Forwards: 64.

Second carrying manner: The face recognition request identifier (namely, FR) is carried in a Supported extended field of the SIP message.
Supported: 100rel,histinfo,precondition,timer,FR.

Optionally, when a call initiated by the calling party is the voice call, the SIP message further includes SDP information of the media server, and the SDP information of the media server includes address information (for example, an IP address), audio port information, an audio encoding and decoding format, video port information, and a video encoding and decoding format of the media server.

When the SIP message includes the SDP information of the media server, the response message of the SIP message further includes SDP information of the call terminal, where the SDP information of the call terminal includes address information (for example, an IP address), audio port information, an audio encoding and decoding format, video port information, and a video encoding and decoding format of the call terminal.

In this embodiment of this application, when the call initiated by the calling party is the voice call, after the media server receives the face recognition application sent by the peer call terminal, media resource negotiation may be performed between the media server and the call terminal based on the SDP information of the media server in the SIP message and the SDP information of the call terminal in the response message of the SIP message in S603 and S604, to establish the video call media transmission channel (namely, the first video call media transmission channel). In this case, in a process in which the video call media transmission channel is established through interaction among a call terminal, a peer call terminal, and a media server in S601, the step in which media resource negotiation is performed between the media server and the call terminal may be replaced with steps S603 and S604.

Optionally, the media server interacts with the peer call terminal (for example, the media server sends a SIP message to the peer call terminal, where the SIP message includes SDP information of the media server; and the peer call terminal sends a response message of the SIP message to the media server, where the response message of the SIP message includes SDP information of the peer call terminal), to perform media resource negotiation and establish the video call media transmission channel (namely, the second video call media transmission channel).

Optionally, when the SIP message includes SDP information of the media server, the face recognition request identifier may also be carried in the SDP information of the media server.

When the SDP information carries the face recognition request identifier (FR), the video port information for transmitting the face video stream may be further indicated in the extended field of the SDP information. Specifically, that a video port for transmitting the call video stream is used to transmit the face video stream may be indicated. The following describes the field of the SDP information.

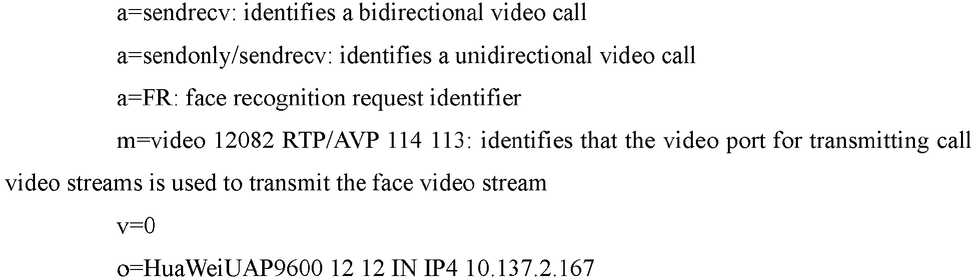

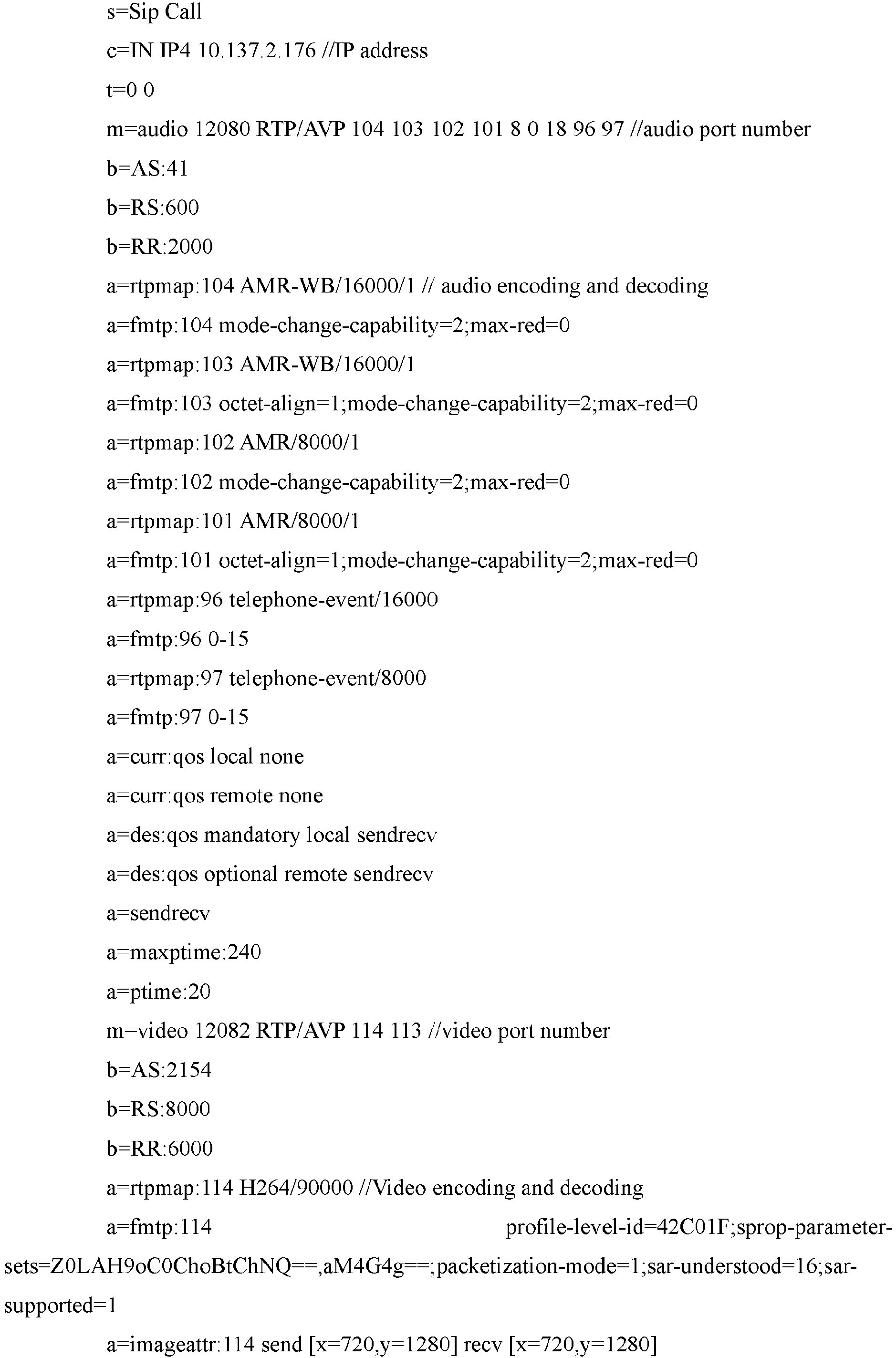

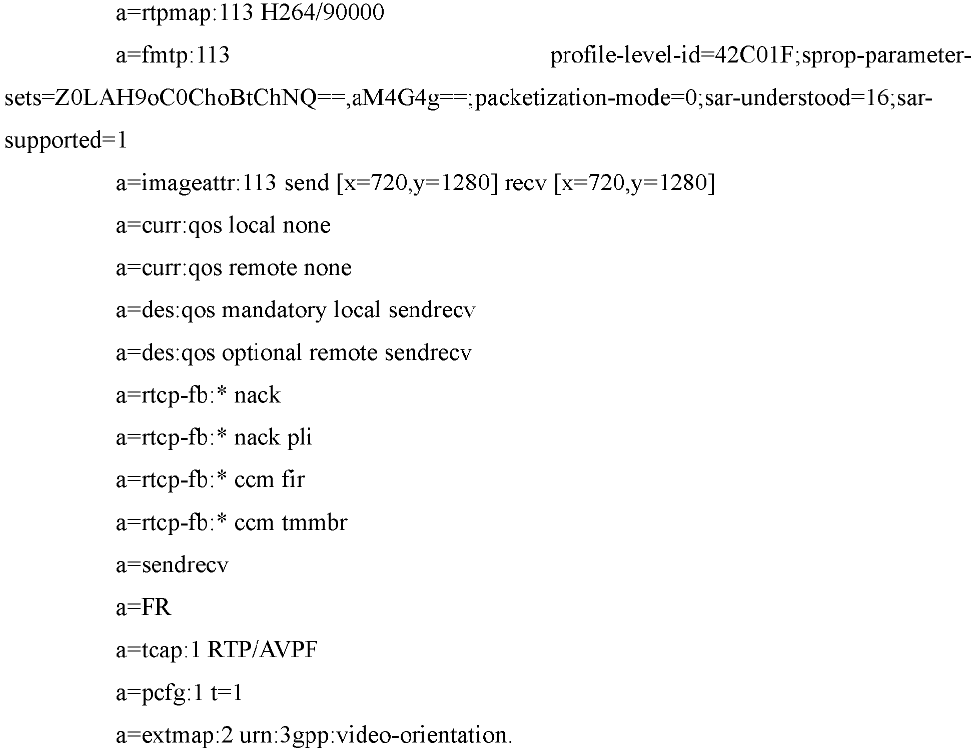

It may be understood that, based on the descriptions of the SDP information, it can be learned that the SDP information may indicate whether a video call is the unidirectional video call or the bidirectional video call. The call terminal and the peer call terminal are used as an example. The unidirectional video call may transmit only a call video stream of the call terminal, and does not transmit a video stream of the peer call terminal. For example, the call terminal sends video content photographed by the call terminal to the peer call terminal, and displays the video content photographed by the call terminal on the peer call terminal, but the peer call terminal does not photograph video content or does not send, to the call terminal, video content photographed by the peer call terminal. That is, the video content photographed by the peer call terminal is not displayed on the call terminal.

S605: The media server sends first transmission channel indication information to the call terminal, where the first transmission channel indication information indicates the call terminal to transmit the face video stream through a video call media transmission channel (specifically, the first video call media transmission channel). Correspondingly, the call terminal receives the first transmission channel indication information from the media server.

The face video stream includes a face image of the user corresponding to the call terminal. Optionally, the face video stream is a video stream photographed by using a camera apparatus of the call terminal; or the face video stream is a video stream obtained from a storage apparatus of the call terminal.

It may be understood that, the face video stream may be obtained in different ways. Therefore, before the call terminal agrees to perform face recognition on the user corresponding to the call terminal, and the call terminal sends the face video stream to the media server, the communication method provided in this embodiment of this application further includes: The media server sends source indication information to the call terminal, where the source indication information indicates that the call terminal obtains the face video stream by using the camera apparatus of the call terminal or obtains the face video stream from the storage apparatus of the call terminal. Correspondingly, the call terminal receives the source indication information from the media server, and obtains the corresponding face video stream based on this indication of the source indication information.

In an implementation, the first transmission channel indication information may be carried in a SIP message. The SIP message and the SIP message in S603 may be a same message, or may be different SIP messages. This is not limited in this embodiment of this application.

The media server may indicate, by using an explicit indication method (that is, by sending the transmission channel indication information) in S605, to transmit the face video stream through the video call media transmission channel. In some cases, the media server may alternatively indicate, by using an implicit indication method, to transmit the face video stream through the video call media transmission channel. For example, the SIP message in S603 carries the SDP information of the media server, and the response message of the SIP message carries the SDP information of the call terminal, to negotiate (or indicate) to transmit the face video stream through the video call media transmission channel established based on this pair of SDP information (the SDP information of the media server and the SDP of the call terminal). It should be understood that the video call media transmission channel is originally used to transmit the call video stream.

S606: The call terminal sends the face video stream to the media server through the video call media transmission channel. Correspondingly, the media server also receives the face video stream from the call terminal through the video call media transmission channel.

S607: The media server obtains a face recognition result.

In this embodiment of this application, the face recognition result is a result of performing, based on the face video stream, face recognition on the user corresponding to the call terminal, and the face recognition result may include information indicating that face recognition succeeds or information indicating that face recognition fails. Optionally, when the face image extracted from the face video stream is consistent with a face image registered in a carrier system, the face recognition result may further include identifier information of a registered user corresponding to the call terminal. For example, the identifier information of the registered user includes but is not limited to identity information such as a name and a certificate of the user.

In an implementation, if the media server does not have a face recognition function, and a face recognition process is performed by a face recognition server dedicated to the face recognition, after the media server receives the face video stream from the call terminal through the first video call media transmission channel, the communication method provided in this embodiment of this application further includes: The media server extracts a target face image from the face video stream; and sends the target face image to the face recognition server, to trigger the face recognition server to perform, based on the target face image, face recognition on the user corresponding to the call terminal. It may be understood that, the face recognition server is a server of the carrier system, and the face recognition server maintains the face image of the user registered in the carrier system and other related information. For detailed details about performing face recognition by the face recognition server based on the target face image, refer to the related descriptions in the foregoing embodiment or related content in a conventional technology. Details are not described herein again.

In this case, that the media server obtains a face recognition result specifically includes: The media server receives the face recognition result from the face recognition server.

In another implementation, the media server may alternatively have a face recognition function. The media server maintains the face image of the user registered in the carrier system and other related information. In this case, the media server extracts a target face image from the face video stream; and performs, based on the target face image, face recognition on the user corresponding to the call terminal, to obtain the face recognition result.

S608: The media server sends the face recognition result to the call terminal. Correspondingly, the call terminal receives the face recognition result sent by the media server.

It may be understood that, transmission channels between the media server and the call terminal may include the video call media transmission channel and signaling channel. Optionally, the media server may send the face recognition result to the call terminal through the video call media transmission channel (namely, the first video call media transmission channel), or may send the face recognition result to the call terminal through a signaling channel. This is not limited in this embodiment of this application.

S609: The media server sends second transmission channel indication information to the peer call terminal. Correspondingly, the peer call terminal receives the second transmission channel indication information from the media server, where the second transmission channel indication information indicates the peer call terminal to receive the face recognition result through the second video call media transmission channel.

S610: The media server sends the face recognition result to the peer call terminal through the video call media transmission channel (specifically, the second video call media transmission channel). Correspondingly, the peer call terminal receives the face recognition result from the media server through the video call media transmission channel.

Certainly, the media server may alternatively send the face recognition result to the peer call terminal through a signaling channel between the media server and the peer call terminal.

S611: The peer call terminal processes a service request of the call terminal based on the face recognition result.

It can be learned based on the descriptions of the foregoing embodiment that, the call terminal may be a user call terminal, and the peer call terminal may be a customer service call terminal. A process of S601 to S611 is a process of performing face recognition on a user corresponding to the user call terminal in a process of a call between the customer service call terminal and the user call terminal. When a face recognition result received by the customer service call terminal includes information indicating that the face recognition succeeds, the customer service call terminal determines that the user holding the user call terminal is an authorized user and is consistent with a registered user of the user call terminal. In this case, the customer service call terminal starts to process the service request of the call terminal, to complete a subsequent service. In this way, it can be ensured that a service of the user is securely processed.

Optionally, when the face recognition succeeds, the interaction between the call terminal and the peer call terminal is restored to the video call or the voice call, and the call video stream is transmitted among the call terminal, the media server, and the peer call terminal through the video call media transmission channel; or media resource renegotiation is performed again among the three, to establish a voice call media transmission channel, and a call voice stream is transmitted through the voice call media transmission channel.

Optionally, when the face video stream is the video stream obtained from the storage apparatus of the call terminal, before the transmitting the face video stream to the media server through the video call media transmission channel (that is, S606), the communication method provided in this embodiment of this application further includes S612.

S612: Stop transmitting the call video stream between the call terminal and the media server through the video call media transmission channel.

In this embodiment of this application, the transmission of the call video stream (the content photographed by the call terminal or the peer call terminal) between the call terminal and the media server through the video call media transmission channel is stopped. In this way, the face video stream obtained from the storage apparatus of the call terminal may be transmitted through the video call media transmission channel.

It can be noted that, when the face video stream transmitted by the call terminal is the video stream photographed by using the camera apparatus of the call terminal, the video call media transmission channel actually does not stop the transmission of the call video stream, that is, the face video stream is the call video stream. A difference is that content of the call video stream may change from another video content to video content including the face image.

Optionally, before the receiving the face recognition result from the media server through the video call media transmission channel, the communication method provided in this embodiment of this application further includes S613.

S613: Stop transmitting the call video stream between the media server and the peer call terminal through the video call media transmission channel.

In this embodiment of this application, the transmission of the call video stream (content photographed by the call terminal or the peer call terminal) between the media server and the peer call terminal through the video call media transmission channel is stopped. In this way, the face recognition result may be transmitted through the video call media transmission channel.

In an implementation, when the face video stream is the video stream photographed by using the camera apparatus of the call terminal, the call terminal captures the face image of the user in real time, and transmits the face image to the media server. It may be understood that, when the camera apparatus of the call terminal captures the face image, the captured face image may not meet a preset condition due to impact of a head posture of the user, where the preset condition may include but is not limited to a position, an angle, and the like of the user head within a specified range (for example, the face should be located within a preset detection frame, and a front side of the face of the user should face the camera apparatus). In this way, face recognition cannot be performed or a face recognition result is inaccurate. Based on this, after receiving the face video stream sent by the call terminal, when determining that the face image in the face video stream does not meet the preset condition, the media server may send posture indication information to the call terminal (correspondingly, the call terminal receives the posture indication information from the media server), where the posture indication information indicates the user corresponding to the call terminal to adjust the posture of the user, so that the face image meets the preset condition. For example, when the face of the user is not entirely within the preset detection frame, the posture indication information is information for prompting the user to place the entire face within the detection frame, or when the angle of the face of the user is inappropriate, the posture indication information is information for prompting the user to rotate the face in a direction (for example, prompting the user to route the head rightwards).

In conclusion, in the communication method provided in this embodiment of this application, when face recognition needs to be performed in a call process, a call terminal may transmit the face video stream through the video call media transmission channel originally used to transmit the call video stream. In this way, no additional bandwidth resources need to be consumed to establish a transmission channel dedicated to transmitting the face video stream, and no additional port resources of the call terminal need to be occupied.

Further, compared with an existing communication method, in the technical solution provided in this embodiment of this application, a face recognition APP does not need to be installed on the terminal. In this way, an operator does not need to perform complex related operations, high operation skills are not required for the operator, and a call does not need to be interrupted.

In this embodiment of this application, in a scenario of a manual customer service, the call terminal is a user call terminal in the customer service scenario, and the peer call terminal is a customer service call terminal in the customer service scenario. It can be learned based on the related descriptions of the foregoing embodiments that the user call terminal that initiates a call may initiate a video call, or may initiate a voice call. The following describes in detail, by using an example in which the call initiated by the user call terminal is the voice call, the communication method provided in this embodiment of this application.

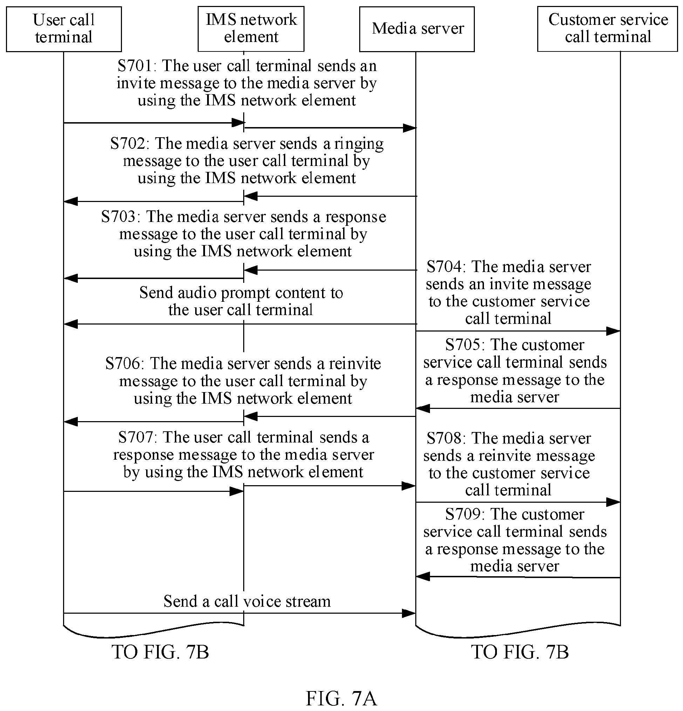

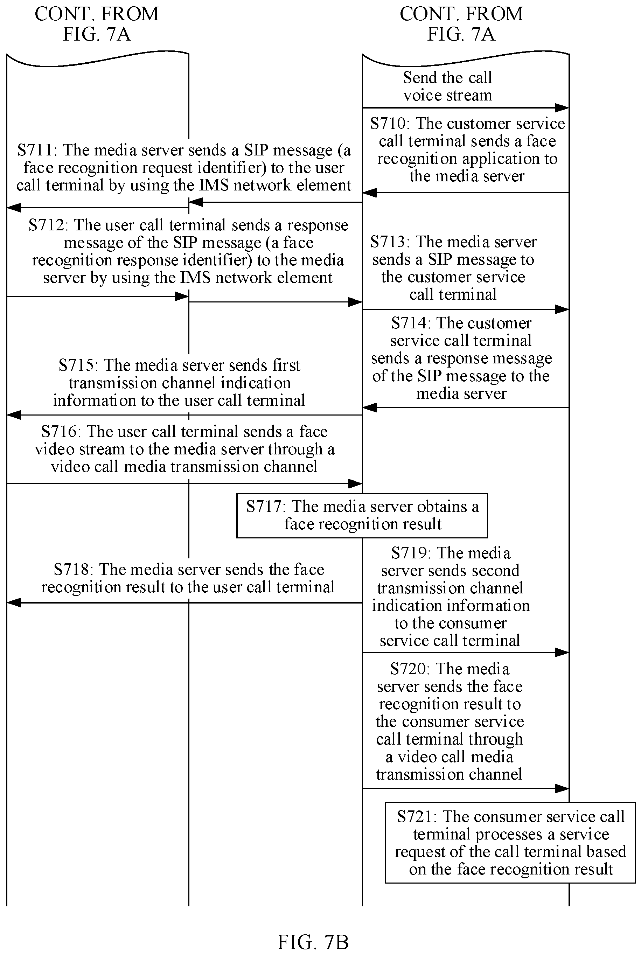

As shown in FIG. 7A and FIG. 7B, the communication method provided in this embodiment of this application includes the following steps.

S701: The user call terminal sends an invite (invite) message to a media server by using an IMS network element.

S702: The media server sends a ringing message to the user call terminal by using the IMS network element.

S703: The media server sends a response message to the user call terminal by using the IMS network element.

It may be understood that, after a customer service system makes a response to the call from the user call terminal, the media server plays audio prompt content related to a service of a user, to prompt the user to select different service content (for example, to select a manual service) based on a requirement. When the user performs an operation under the prompt of the audio prompt content, and selects the manual service, after the media server detects the operation of selecting the manual service, the media server allocates a customer service staff to the user (that is, selects a corresponding customer service call terminal for the user call terminal).

S704: The media server sends an invite (invite) message to the customer service call terminal.

S705: The customer service call terminal sends a response message to the media server.

S706: The media server sends a reinvite (reinvite) message to the user call terminal by using the IMS network element.

The reinvite (reinvite) message includes SDP information of the media server, and the SDP information of the media server includes address information (for example, an IP address), audio port information, and an audio encoding and decoding format of the media server.

S707: The user call terminal sends a response message to the media server by using the IMS network element.

The response message includes SDP information of the user call terminal, and the SDP information of the user call terminal includes address information (for example, an IP address), audio port information, and an audio encoding and decoding format of the user call terminal.

S706 and S707 are a process of performing interaction between the call terminal and the media server, and establishing a voice call media transmission channel between the user call terminal and the media server through media resource negotiation.

S708: The media server sends a reinvite (reinvite) message to the customer service call terminal.

The reinvite (reinvite) message includes SDP information of the media server. For descriptions of the SDP information of the media server, refer to S906.

S709: The customer service call terminal sends a response message to the media server.

The response message includes SDP information of the customer service call terminal, and the SDP information of the customer service call terminal includes address information (for example, an IP address), audio port information, and an audio encoding and decoding format of the customer service call terminal.

S709 and S709 are a process of performing interaction between the customer service call terminal and the media server, and establishing a voice call media transmission channel between the customer service call terminal and the media server through media resource negotiation.

It may be understood that, S701 to S709 are a process in which the user call terminal calls the customer service call terminal, and the voice call media transmission channels are established. For content carried in messages in steps S701 to S709, refer to the foregoing detailed descriptions of S201 to S209. Details are not described herein again.

S710: The customer service call terminal sends a face recognition application to the media server. Correspondingly, the media server receives the face recognition application sent by the customer service call terminal.

The face recognition application includes a face recognition application identifier, and the face recognition application identifier is used to apply for performing face recognition on a user corresponding to the call terminal, that is, performing face recognition on the call terminal in a process of the call between the call terminal and the peer call terminal.

S711: The media server sends a SIP message to the user call terminal by using the IMS network element, where the SIP message includes the face recognition request identifier, and the face recognition request identifier is for requesting to perform face recognition on the user corresponding to the call terminal. Correspondingly, the user call terminal receives the SIP message from the media server.

The SIP message further includes SDP information of the media server, and the SDP information of the media server includes address information, audio port information, an audio encoding and decoding format, video port information, and a video encoding and decoding format of the media server.

Optionally, the face recognition request identifier (FR) in the SIP message may be carried in a header field of the SIP message, or the face recognition request identifier may be carried in the SDP information of the SIP message. For details, refer to the related descriptions of S603 and S604 in the foregoing embodiment. Details are not described herein again.

S712: The user call terminal sends a response message of the SIP message to the media server by using the IMS network element, where the response message of the SIP message indicates that the user corresponding to the call terminal agrees to perform face recognition. Correspondingly, the media server receives the response message of the SIP message sent by the user call terminal.

Optionally, the response message of the SIP message includes a face recognition response identifier, and the face recognition response identifier indicates that the user corresponding to the call terminal agrees to perform face recognition.

The response message of the SIP message further includes SDP information of the user call terminal, where the SDP information of the user call terminal includes address information (for example, an IP address), audio port information, an audio encoding and decoding format, video port information, and a video encoding and decoding format of the user call terminal.

It can be noted that, the user call terminal initiates the voice call, and the voice call media transmission channels are established through steps S706 to S709 in the foregoing embodiment. A face video stream needs to be transmitted in a face recognition process, but in a voice call process, only a call voice stream can be transmitted, and the video stream cannot be transmitted. Therefore, after the media server receives the face recognition application, and the user agrees to perform face recognition, the media server triggers establishment of a video call media transmission channel, that is, needs to convert the voice call into a video call, to establish the transmission channel that can be used to transmit the video stream, and transmits the face video stream through the video call media transmission channel.

It can be understood that, the video call media transmission channel includes a first video call media transmission channel between the user call terminal and the media server, and a second video call terminal between the customer service call terminal and the media server, and the first video call media transmission channel and the second video call media transmission channel exist in pairs, and are transmission channels used for communication between the customer service call terminal and the user call terminal.

In this embodiment of this application, the video call media transmission channel (namely, the first video call media transmission channel) between the user call terminal and the media server is established through media resource negotiation between the SDP information of the media server in the SIP message and the SDP information of the user call terminal in the response message of the SIP message in S711 and S712.

A process of establishing the second video call media transmission channel is as follows: S713 and S714.

S713: The media server sends a SIP message to the customer service call terminal. Correspondingly, the customer service call terminal receives the SIP message from the media server. The SIP message includes SDP information of the media server.

The SDP information of the media server includes address information, audio port information, an audio encoding and decoding format, video port information, and a video encoding and decoding format of the media server. It should be noted that, different from SDP information (including address information, audio port information, and an audio encoding and decoding format of a device) in a media resource negotiation message in a voice call scenario, SDP information in a media resource negotiation message in a video call scenario further includes video port information and a video encoding and decoding format of a device.

S714: The customer service call terminal sends a response message of the SIP message to the media server. Correspondingly, the media server receives the response message of the SIP message from the customer service call terminal, where the response message of the SIP message includes SDP information of the customer service call terminal.

The SDP information of the customer service call terminal includes address information, audio port information, an audio encoding and decoding format, video port information, and a video encoding and decoding format of the customer service call terminal.

The video call media transmission channel (namely, the second video call media transmission channel) between the customer service call terminal and the media server may be established through a media resource negotiation process in S713 and S714.

S715: The media server sends first transmission channel indication information to the user call terminal, where the first transmission channel indication information indicates to transmit the face video stream through the video call media transmission channel. Correspondingly, the user call terminal receives the transmission channel indication information from the media server.

So far, a transmission channel used to transmit the face video stream has been established, the transmission channel used to transmit the face video stream is a video call media transmission channel, and face recognition may be completed based on the video call media transmission channel.

It can be noted that, when the face video stream is a video stream photographed by using a camera apparatus of the user call terminal, the face video stream still belongs to the call video stream. In this case, the media server may not send the first transmission channel indication information to the user call terminal.

S716: The user call terminal sends the face video stream to the media server through the video call media transmission channel. Correspondingly, the media server receives the face video stream from the user call terminal through the video call media transmission channel, where the face video stream includes a face image of the user corresponding to the user call terminal.

In this embodiment of this application, the user call terminal transmits, based on the first transmission channel indication information received by the user call terminal, the face video stream through the video call media transmission channel used to transmit the call video stream. The face video stream includes the face image of the user corresponding to the call terminal. Optionally, the face video stream is a video stream photographed by using the camera apparatus of the call terminal; or the face video stream is a video stream obtained from a storage apparatus of the call terminal.

S717: The media server obtains a face recognition result.

S718: The media server sends the face recognition result to the user call terminal. Correspondingly, the user call terminal receives the face recognition result sent by the media server.

S719: The media server sends second transmission channel indication information to the customer service call terminal. Correspondingly, the customer service call terminal receives the second transmission channel indication information from the media server, where the second transmission channel indication information indicates the customer service call terminal to receive the face recognition result through the second video call media transmission channel.

S720: The media server sends the face recognition result to the customer service call terminal through the video call media transmission channel. Correspondingly, the customer service call terminal receives the face recognition result from the media server through the video call media transmission channel.

S721: The customer service call terminal processes a service request of the call terminal based on the face recognition result.

Optionally, the media server sends source indication information to the call terminal, where the source indication information indicates that the call terminal obtains the face video stream by using the camera apparatus of the call terminal or obtains the face video stream from the storage apparatus of the call terminal.

Optionally, when a face video stream is transmitted between the user call terminal and the media server through the first video call media transmission channel, and the face video stream is obtained from the storage apparatus of the user call terminal, transmission of the call video stream between the call terminal and the media server through the first video call media transmission channel may be stopped.

Similarly, optionally, when the face recognition result is transmitted between the customer service call terminal and the media server through the second video call media transmission channel, the transmission of the call video stream between the customer service call terminal and the media server through the second video call media transmission channel may be stopped.

Further, the media server may alternatively send posture indication information to the user call terminal to indicate the user to adjust a posture, so that the face image meets a preset condition.

For descriptions of other details of S701 to S721, refer to the related descriptions in the foregoing embodiment. Details are not described herein again.

Correspondingly, an embodiment of this application provides a call terminal. The call terminal may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It can be noted that, in this embodiment of the present invention, division into the modules is an example, and is merely a logical function division. During actual implementation, another division manner may be used.

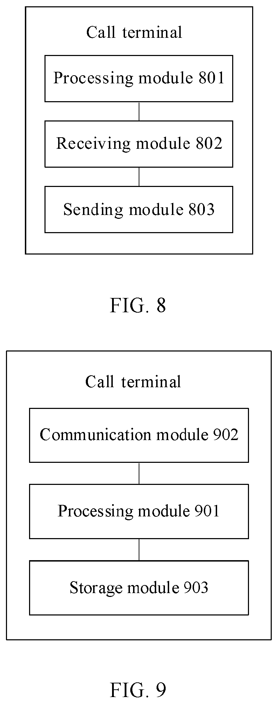

When each functional module is obtained through division based on each function, FIG. 8 is a schematic diagram of a possible structure of the call terminal in the foregoing embodiments. As shown in FIG. 8, the call terminal includes a processing module 801, a receiving module 802, and a sending module 803. The processing module 801 is configured to establish a video call media transmission channel, where the video call media transmission channel is used to transmit a call video stream between the call terminal and a peer call terminal in a video call service, and the call video stream includes video content photographed by the call terminal or the peer call terminal. For example, the processing module 801 performs S601 in the foregoing method embodiment. The receiving module 802 is configured to receive a SIP message from a media server, where the SIP message includes a face recognition request identifier, and the face recognition request identifier is for requesting to perform face recognition on a user corresponding to the call terminal. For example, the receiving module 802 performs S603 in the foregoing method embodiment. The sending module 803 is configured to send a response message of the SIP message to the media server, where the response message of the SIP message indicates that the user corresponding to the call terminal agrees to perform face recognition; and is further configured to send a face video stream to the media server through the video call media transmission channel, where the face video stream includes a face image of the user corresponding to the call terminal. For example, the sending module 803 performs S604 and S606 in the foregoing method embodiment. The receiving module 802 is configured to receive a face recognition result from the media server. For example, the receiving module 802 performs S608 in the foregoing method embodiment.

Optionally, the receiving module 802 is further configured to receive source indication information from the media server, where the source indication information indicates that the call terminal obtains the face video stream by using a camera apparatus of the call terminal or obtains the face video stream from a storage apparatus of the call terminal.

Optionally, the face video stream is the video stream obtained from the storage apparatus of the call terminal, and the receiving module 802 is further configured to receive transmission channel indication information from the media server, where the transmission channel indication information indicates the call terminal to transmit the face video stream through the video call media transmission channel. For example, the receiving module 802 performs S605 in the foregoing method embodiment.

The processing module 801 is further configured to control the receiving module 802 or the sending module 803 to stop transmitting the call video stream through the video call media transmission channel. The processing module 801 performs S612 in the foregoing method embodiment.

The receiving module 802 is further configured to receive posture indication information from the media server, where the posture indication information indicates the user corresponding to the call terminal to adjust a posture of the user, so that the face image meets a preset condition.

The modules of the call terminal may be further configured to perform other actions in the foregoing method embodiments. All related content of each step in the foregoing method embodiments may be referenced to function descriptions of corresponding functional modules. Details are not described herein again.

When an integrated unit is used, FIG. 9 is a schematic diagram of another possible structure of the call terminal in the foregoing embodiments. As shown in FIG. 9, the call terminal provided in this embodiment of this application may include a processing module 901 and a communication module 902. The processing module 901 may be configured to control and manage actions of the call terminal. For example, the processing module 901 may be configured to support the call terminal in performing S601 and S612 in the foregoing method embodiment, and/or another process of the technology described in this specification. The communication module 902 may be configured to support communication between the call terminal and another network entity. The communication module 902 integrates functions of the foregoing sending module 803 and the foregoing receiving module 802. The communication module 902 may be configured to support the call terminal in performing S603, S604, S605, S606, and S608 in the foregoing method embodiment. Optionally, as shown in FIG. 9, the call terminal may further include: a storage module 903, configured to store program code and data of the call terminal, for example, a received face video stream or face recognition result.

The processing module 901 may be a processor. For example, the processor may be the processor 410 in FIG. 4A. The communication module 902 may be a transceiver, a transceiver circuit, a communication interface, or the like, for example, the mobile communication module 450 and/or the wireless communication module 460 in FIG. 4A. The storage module 903 may be a memory, for example, the internal memory 421 in FIG. 4A.

For more details about the modules that are included in the call terminal and that are for implementing the foregoing functions, refer to the descriptions in the foregoing method embodiments. Details are not described herein again.

Correspondingly, an embodiment of this application provides a call terminal. The call terminal is a peer end of the call terminal shown in FIG. 8 or FIG. 9. The call terminal may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It can be noted that, in this embodiment of the present invention, division into the modules is an example, and is merely a logical function division. During actual implementation, another division manner may be used.

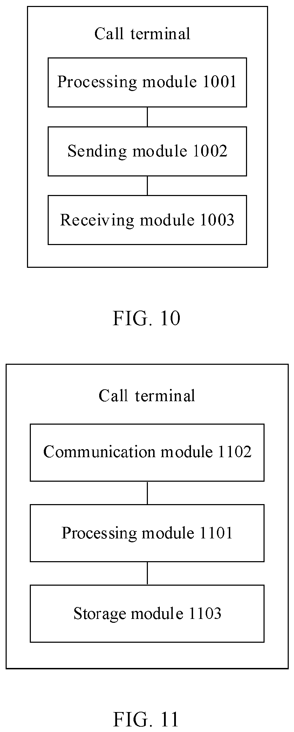

When each functional module is obtained through division based on each function, FIG. 10 is a schematic diagram of a possible structure of the call terminal in the foregoing embodiments. As shown in FIG. 10, the call terminal includes a processing module 1001, a sending module 1002, and a receiving module 1003. The processing module 1001 is configured to establish a video call media transmission channel, where the video call media transmission channel is used to transmit a call video stream between the call terminal and a peer call terminal in a video call service, and the call video stream includes video content photographed by the call terminal or the peer call terminal. For example, the processing module 1001 performs S601 in the foregoing method embodiment. The sending module 1002 is configured to send a face recognition application to a media server, where the face recognition application includes a face recognition application identifier, and the face recognition application identifier is used to apply for performing face recognition on a user corresponding to the peer call terminal communicating with the call terminal. For example, the sending module 1002 performs S602 and S710 in the foregoing method embodiments. The receiving module 1003 is configured to receive a face recognition result from the media server through the video call media transmission channel, where the face recognition result is a result of performing, based on a face video stream, face recognition on the user corresponding to the peer call terminal. For example, the receiving module 1003 performs S610 and S720 in the foregoing method embodiments. The processing module 1001 is further configured to process a service request of the peer call terminal based on the face recognition result. For example, the processing module 1001 performs S611 and S721 in the foregoing method embodiments.

Optionally, the receiving module 1003 is further configured to receive transmission channel indication information from the media server, where the transmission channel indication information indicates the call terminal to receive the face recognition result through the video call media transmission channel. For example, the receiving module 1003 performs S609 and S719 in the foregoing method embodiments.

Optionally, the processing module 1001 is further configured to control the sending module 1002 or the receiving module 1003 to stop transmitting the call video stream through the video call media transmission channel. For example, the processing module 1001 performs S613 in the foregoing method embodiment.

Optionally, the face recognition result includes information indicating that face recognition succeeds or information indicating that face recognition fails, and the processing module 1001 is further configured to process the service request of the peer call terminal when the face recognition result includes the information indicating that the face recognition succeeds.

The modules of the call terminal may be further configured to perform other actions in the foregoing method embodiments. All related content of each step in the foregoing method embodiments may be referenced to function descriptions of corresponding functional modules. Details are not described herein again.

When an integrated unit is used, FIG. 11 is a schematic diagram of another possible structure of the call terminal in the foregoing embodiments. As shown in FIG. 11, the call terminal provided in this embodiment of this application may include a processing module 1101 and a communication module 1102. The processing module 1101 may be configured to control and manage actions of the call terminal. For example, the processing module 1101 may be configured to support the call terminal in performing S601, S611, S613, and S721 in the foregoing method embodiments, and/or another process of the technology described in this specification. The communication module 1102 may be configured to support communication between the call terminal and another network entity. The communication module 1102 integrates functions of the foregoing sending module 1002 and the foregoing receiving module 1003. The communication module 1102 may be configured to support the call terminal in performing S602, S609, S610, S710, S719, and S720 in the foregoing method embodiments. Optionally, as shown in FIG. 11, the call terminal may further include: a storage module 1103, configured to store program code and data of the call terminal.

The processing module 1101 may be a processor. For example, the processor may be the processor 410 in FIG. 4A. The communication module 1102 may be a transceiver, a transceiver circuit, a communication interface, or the like, for example, the mobile communication module 450 and/or the wireless communication module 460 in FIG. 4A. The storage module 1103 may be a memory, for example, the internal memory 421 in FIG. 4A.

For more details about the modules that are included in the call terminal and that are for implementing the foregoing functions, refer to the descriptions in the foregoing method embodiments. Details are not described herein again.

Correspondingly, an embodiment of this application provides a media server. The media server may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It can be noted that, in this embodiment of the present invention, division into the modules is an example, and is merely a logical function division. During actual implementation, another division manner may be used.

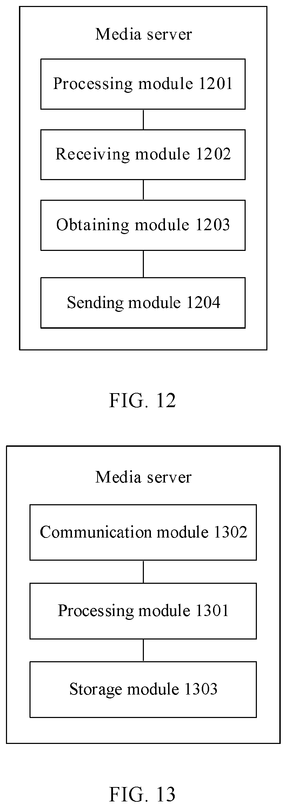

When each functional module is obtained through division based on each function, FIG. 12 is a schematic diagram of a possible structure of the media server in the foregoing embodiments. As shown in FIG. 12, the media server includes a processing module 1201, a receiving module 1202, an obtaining module 1203, and a sending module 1204. The processing module 1201 is configured to establish a first video call media transmission channel and a second video call media transmission channel, where the first video call media transmission channel is a video call media transmission channel between a call terminal and the media server, and the second video call media transmission channel is a video call media transmission channel between the media server and a peer call terminal; and the first video call media transmission channel and the second video call media transmission channel are used to transmit a call video stream between the call terminal and the peer call terminal in a video call service, and the call video stream includes video content photographed by the call terminal or the peer call terminal. For example, the processing module 1201 performs S601 in the foregoing method embodiment. The receiving module 1202 is configured to receive a face recognition application from the peer call terminal, where the face recognition application includes a face recognition application identifier, and the face recognition application identifier is used to apply for performing face recognition on a user corresponding to the call terminal communicating with the peer call terminal. For example, the receiving module 1202 performs S602 and S710 in the foregoing method embodiments. In addition, the receiving module 1202 is configured to receive a face video stream from the call terminal through the first video call media transmission channel, where the face video stream includes a face image of the user corresponding to the call terminal. For example, the receiving module 1202 performs S606 and S716 in the foregoing method embodiments. The obtaining module 1203 is configured to obtain a face recognition result, where the face recognition result is a result of performing, based on a face video stream, face recognition on the user corresponding to the call terminal. For example, the obtaining module 1203 performs S607 and S717 in the foregoing method embodiments. The sending module 1204 is configured to send the face recognition result to the peer call terminal through the second video call media transmission channel, to trigger the peer call terminal to process a service request of the call terminal based on the face recognition result. For example, the sending module 1204 performs S608 and S720 in the foregoing method embodiments.

Optionally, the sending module 1204 is further configured to send a SIP message to the call terminal, where the SIP message includes a face recognition request identifier, and the face recognition request identifier is for requesting to perform face recognition on the user corresponding to the call terminal. For example, the sending module 1204 performs S603 and S711 in the foregoing method embodiments. The receiving module 1202 is further configured to receive a response message of the SIP message from the call terminal, where the response message of the SIP message indicates that the user corresponding to the call terminal agrees to perform face recognition. For example, the receiving module 1202 performs S604 and S712 in the foregoing method embodiments.

Optionally, the sending module 1204 is further configured to send source indication information to the call terminal, where the source indication information indicates that the call terminal obtains the face video stream by using a camera apparatus of the call terminal or obtains the face video stream from a storage apparatus of the call terminal.

Optionally, the face video stream is the video stream obtained from the storage apparatus of the call terminal, and the sending module 1204 is further configured to send first transmission channel indication information to the call terminal, where the first transmission channel indication information indicates the call terminal to transmit the face video stream through the first video call media transmission channel. For example, the sending module 1204 performs S605 and S715 in the foregoing method embodiments.

Optionally, the processing module 1201 is further configured to control the sending module 1204 or the receiving module 1202 to stop transmitting the call video stream through the first video call media transmission channel. For example, the processing module 1201 performs S612 in the foregoing method embodiment.

Optionally, the sending module 1204 is further configured to send second transmission channel indication information to the peer call terminal, where the second transmission channel indication information indicates the peer call terminal to receive the face recognition result through the second video call media transmission channel. For example, the sending module 1204 performs S609 and S719 in the foregoing method embodiments.

Optionally, the processing module 1201 is further configured to control the sending module 1204 or the receiving module 1202 to stop transmitting the call video stream through the second video call media transmission channel. For example, the processing module 1201 performs S613 in the foregoing method embodiment.

Optionally, the sending module 1204 is further configured to send the face recognition result to the call terminal. For example, the sending module 1204 performs S608 and S718 in the foregoing method embodiments.

Optionally, the sending module 1204 is further configured to send posture indication information to the call terminal, where the posture indication information indicates the user corresponding to the call terminal to adjust a posture of the user, so that the face image meets a preset condition.

Optionally, the processing module 1201 is further configured to extract a target face image from the face video stream. The sending module 1204 is further configured to send the target face image to a face recognition server, to trigger the face recognition server to perform, based on the target face image, face recognition on the user corresponding to the call terminal. The obtaining module 1203 is specifically configured to receive the face recognition result from the face recognition server.

The modules of the media server may be further configured to perform other actions in the foregoing method embodiments. All related content of each step in the foregoing method embodiments may be referenced to function descriptions of corresponding functional modules. Details are not described herein again.

When an integrated unit is used, FIG. 13 is a schematic diagram of another possible structure of a media server in the foregoing embodiment. As shown in FIG. 13, the media server provided in this embodiment of this application may include a processing module 1301 and a communication module 1302. The processing module 1301 may be configured to control and manage an action of the media server. For example, the processing module 1301 may be configured to support the media server in performing S601, S607, S612, S613, and S717 in the foregoing method embodiments, and/or another process of the technology described in this specification. The communication module 1302 may be configured to support the media server in communicating with another network entity. The communication module 1302 integrates functions of the receiving module 1202 and the sending module 1204. The communication module 1302 may be configured to support the media server in performing S602, S603, S604, S605, S606, S608, S609, S710, S711, S712, S715, S716, S719 and S720 in the foregoing method embodiments. Optionally, as shown in FIG. 13, the media server may further include: a storage module 1303, configured to store program code and data of the media server.

The processing module 1301 may be a processor. For example, the processor may be the processor 501 in FIG. 5. The communication module 1302 may be a transceiver, a transceiver circuit, a network interface, or the like, for example, the network interface 503 in FIG. 5. The storage module 1303 may be a memory, for example, the memory 502 in FIG. 5.

For more details about the modules that are included in the media server and that are for implementing the foregoing functions, refer to descriptions in the foregoing method embodiments. Details are not described herein again.

Embodiments in this specification are all described in a progressive manner. For same or similar parts in embodiments, refer to these embodiments, and each embodiment focuses on a difference from other embodiments.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

Based on the foregoing descriptions about implementations, a person skilled in the art may clearly understand that, for the purpose of convenient and brief description, division of the foregoing functional modules is merely used as an example for description. In actual application, the foregoing functions can be allocated to different functional modules for implementation based on a requirement, that is, an inner structure of an apparatus is divided into different functional modules to implement all or some of the functions described above. For a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The software product is stored in a storage medium and includes several instructions for instructing a computer device (which may be a personal computer, a server, or a network device) or a processor to perform all or some of the steps in the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. The protection scope of this application is solely subject to the protection scope of the claims.

## Claims

1. A communication method, wherein the method is performed by a first call terminal, and the method comprises:
establishing (S601) a video call media transmission channel, wherein the video call media transmission channel is used to transmit a call video stream between the first call terminal and a second call terminal in a video call service, and the call video stream comprises video content photographed by the first call terminal or the second call terminal;
receiving (S603) a session initiation protocol SIP message from a media server, wherein the SIP message comprises a face recognition request identifier, and the face recognition request identifier is for requesting to perform face recognition on a user corresponding to the first call terminal;
sending (S604) a response message of the SIP message to the media server, wherein the response message of the SIP message indicates that the user corresponding to the first call terminal agrees to perform face recognition;
sending (S606) a face video stream to the media server through the video call media transmission channel, wherein the face video stream comprises a face image of the user corresponding to the first call terminal; and
receiving (S608) a face recognition result from the media server.

2. The method according to claim 1, wherein
the face video stream is a video stream photographed by using a camera apparatus of the first call terminal; or
the face video stream is a video stream obtained from a storage apparatus of the first call terminal.

3. The method according to claim 2, wherein the method further comprises:
receiving source indication information from the media server, wherein the source indication information indicates that the first call terminal obtains the face video stream by using the camera apparatus of the first call terminal or obtains the face video stream from the storage apparatus of the first call terminal.

4. The method according to claim 3, wherein the face video stream is the video stream obtained from the storage apparatus of the first call terminal, and before the sending a face video stream to the media server through the video call media transmission channel, the method further comprises:
receiving (S605) transmission channel indication information from the media server, wherein the transmission channel indication information indicates the first call terminal to transmit the face video stream through the video call media transmission channel.

5. A communication method, wherein the method is performed by a second call terminal, and the method comprises:
establishing (S601) a video call media transmission channel, wherein the video call media transmission channel is used to transmit a call video stream between the second call terminal and a first call terminal in a video call service, and the call video stream comprises video content photographed by the second call terminal or the first call terminal;
sending (S602) a face recognition application to a media server, wherein the face recognition application comprises a face recognition application identifier, and the face recognition application identifier is used to apply for performing face recognition on a user corresponding to the first call terminal communicating with the second call terminal;
receiving (S610) a face recognition result from the media server through the video call media transmission channel, wherein the face recognition result is a result of performing, based on a face video stream, face recognition on the user corresponding to the first call terminal; and
processing (S611) a service request of the first call terminal based on the face recognition result.

6. The method according to claim 5, wherein before the receiving a face recognition result from the media server through the video call media transmission channel, the method further comprises:
stopping (S613) transmitting the call video stream through the video call media transmission channel.

7. A communication method, wherein the method is performed by a media server, and the method comprises:
establishing (S601) a first video call media transmission channel and a second video call media transmission channel, wherein the first video call media transmission channel is a video call media transmission channel between a first call terminal and the media server, and the second video call media transmission channel is a video call media transmission channel between the media server and a second call terminal; and the first video call media transmission channel and the second video call media transmission channel are used to transmit a call video stream between the first call terminal and the second call terminal in a video call service, and the call video stream comprises video content photographed by the first call terminal or the second call terminal;
receiving (S602) a face recognition application from the second call terminal, wherein the face recognition application comprises a face recognition application identifier, and the face recognition application identifier is used to apply for performing face recognition on a user corresponding to the first call terminal communicating with the second call terminal;
sending (S603) a session initiation protocol SIP message to the first call terminal, wherein the SIP message comprises a face recognition request identifier, and the face recognition request identifier is for requesting to perform face recognition on a user corresponding to the first call terminal;
receiving (S604) a response message of the SIP message to the media server, wherein the response message of the SIP message indicates that the user corresponding to the first call terminal agrees to perform face recognition;
receiving (S606) a face video stream from the first call terminal through the first video call media transmission channel, wherein the face video stream comprises a face image of the user corresponding to the first call terminal;
obtaining (S607) a face recognition result, wherein the face recognition result is a result of performing, based on the face video stream, face recognition on the user corresponding to the first call terminal;
sending (S608) the face recognition result to the first call terminal; and
sending (S610) the face recognition result to the second call terminal through the second video call media transmission channel, to trigger the second call terminal to process (S611) a service request of the first call terminal based on the face recognition result.

8. The method according to claim 7, wherein
the face video stream is a video stream photographed by using a camera apparatus of the first call terminal; or
the face video stream is a video stream obtained from a storage apparatus of the first call terminal.

9. The method according to claim 8, wherein the method further comprises:
sending source indication information to the first call terminal, wherein the source indication information indicates that the first call terminal obtains the face video stream by using the camera apparatus of the first call terminal or obtains the face video stream from the storage apparatus of the first call terminal.

10. A call terminal, comprising a memory and at least one processor connected to the memory, wherein the memory is configured to store computer program code, the computer program code comprises computer instructions, and when the computer instructions are executed by the at least one processor, the call terminal is enabled to perform the method according to any one of claims 1 to 4, or 5-6.

11. A media server, comprising a memory and at least one processor connected to the memory, wherein the memory is configured to store computer program code, the computer program code comprises computer instructions, and when the computer instructions are executed by the at least one processor, the media server is enabled to perform the method according to any one of claims 7 to 9.

12. A computer-readable storage medium, comprising computer instructions, wherein when the computer instructions are run on a call terminal, the call terminal is enabled to perform the method according to any one of claims 1 to 4, or 5-6.

13. A computer-readable storage medium, comprising computer instructions, wherein when the computer instructions are run on a server, the server is enabled to perform the method according to any one of claims 7 to 9.

14. A communication system, comprising a first call terminal, a second call terminal, and a media server, wherein the first call terminal performs the method according to any one of claims 1 to 4, the second call terminal performs the method according to any one of claims 5 to 6, and the media server performs the method according to any one of claims 7 to 9.

## Patentansprüche

1. Kommunikationsverfahren, wobei das Verfahren durch ein erstes Anrufendgerät durchgeführt wird und das Verfahren Folgendes umfasst:
Einrichten (S601) eines Videoanrufmedienübertragungskanals, wobei der Videoanrufmedienübertragungskanal verwendet wird, um einen Anrufvideostream zwischen dem ersten Anrufendgerät und einem zweiten Anrufendgerät in einem Videoanrufdienst zu übertragen, und der Anrufvideostream Videoinhalte umfasst, die durch das erste Anrufendgerät oder das zweite Anrufendgerät aufgenommen werden; Empfangen (S603) einer Sitzungsinitiierungsprotokoll- bzw. SIP-Nachricht von einem Medienserver, wobei die SIP-Nachricht eine Gesichtserkennungsanforderungskennung umfasst und die Gesichtserkennungsanforderungskennung zum Anfordern einer Durchführung einer Gesichtserkennung an einem dem ersten Anrufendgerät entsprechenden Benutzer dient;
Senden (S604) einer Antwortnachricht der SIP-Nachricht an den Medienserver, wobei die Antwortnachricht der SIP-Nachricht angibt, dass der dem ersten Anrufendgerät entsprechende Benutzer der Durchführung einer Gesichtserkennung zustimmt;
Senden (S606) eines Gesichtsvideostreams an den Medienserver über den Videoanrufmedienübertragungskanal, wobei der Gesichtsvideostream ein Gesichtsbild des dem ersten Anrufendgerät entsprechenden Benutzers umfasst; und
Empfangen (S608) eines Gesichtserkennungsergebnis von dem Medienserver.

2. Verfahren nach Anspruch 1, wobei
der Gesichtsvideostream ein Videostream ist, der unter Verwendung einer Kameraeinrichtung des ersten Anrufendgeräts aufgenommen wird; oder
der Gesichtsvideostream ein Videostream ist, der von einer Speichereinrichtung des ersten Anrufendgeräts erhalten wird.

3. Verfahren nach Anspruch 2, wobei das Verfahren ferner Folgendes umfasst:
Empfangen von Quellenangabeinformationen von dem Medienserver, wobei die Quellenangabeinformationen angeben, dass das erste Anrufendgerät den Gesichtsvideostream unter Verwendung der Kameraeinrichtung des ersten Anrufendgeräts erhält oder den Gesichtsvideostream von der Speichereinrichtung des ersten Anrufendgeräts erhält.

4. Verfahren nach Anspruch 3, wobei der Gesichtsvideostream der von der Speichereinrichtung des ersten Anrufendgeräts erhaltene Videostream ist und das Verfahren vor dem Senden eines Gesichtsvideostreams an den Medienserver über den Videoanrufmedienübertragungskanal ferner Folgendes umfasst:
Empfangen (S605) von Übertragungskanalangabeinformationen von dem Medienserver, wobei die Übertragungskanalangabeinformationen dem ersten Anrufendgerät angeben, den Gesichtsvideostream über den Videoanrufmedienübertragungskanal zu übertragen.

5. Kommunikationsverfahren, wobei das Verfahren durch ein zweites Anrufendgerät durchgeführt wird und das Verfahren Folgendes umfasst:
Einrichten (S601) eines Videoanrufmedienübertragungskanals, wobei der Videoanrufmedienübertragungskanal verwendet wird, um einen Anrufvideostream zwischen dem zweiten Anrufendgerät und einem ersten Anrufendgerät in einem Videoanrufdienst zu übertragen, und der Anrufvideostream Videoinhalte umfasst, die durch das zweite Anrufendgerät oder das erste Anrufendgerät aufgenommen werden;
Senden (S602) einer Gesichtserkennungsanwendung an einen Medienserver, wobei die Gesichtserkennungsanwendung eine Gesichtserkennungsanwendungskennung umfasst und die Gesichtserkennungsanwendungskennung zur Anwendung zum Durchführen einer Gesichtserkennung an einem Benutzer, der dem ersten Anrufendgerät, das mit dem zweiten Anrufendgerät kommuniziert, entspricht, verwendet wird;
Empfangen (S610) eines Gesichtserkennungsergebnisses von dem Medienserver über den Videoanrufmedienübertragungskanal, wobei das Gesichtserkennungsergebnis ein Ergebnis einer Durchführung, basierend auf einem Gesichtsvideostream, einer Gesichtserkennung an dem dem ersten Anrufendgerät entsprechenden Benutzer ist; und
Verarbeiten (S611) einer Dienstanforderung des ersten Anrufendgeräts basierend auf dem Gesichtserkennungsergebnis.

6. Verfahren nach Anspruch 5, wobei das Verfahren vor dem Empfangen eines Gesichtserkennungsergebnisses von dem Medienserver über den Videoanrufmedienübertragungskanal ferner Folgendes umfasst:
Stoppen (S613) des Übertragens des Anrufvideostreams über den Videoanrufmedienübertragungskanal.

7. Kommunikationsverfahren, wobei das Verfahren durch einen Medienserver durchgeführt wird und das Verfahren Folgendes umfasst:
Einrichten (S601) eines ersten Videoanrufmedienübertragungskanals und eines zweiten Videoanrufmedienübertragungskanals, wobei der erste Videoanrufmedienübertragungskanal ein Videoanrufmedienübertragungskanal zwischen einem ersten Anrufendgerät und dem Medienserver ist und der zweite Videoanrufmedienübertragungskanal ein Videoanrufmedienübertragungskanal zwischen dem Medienserver und einem zweiten Anrufendgerät ist; und der erste Videoanrufmedienübertragungskanal und der zweite Videoanrufmedienübertragungskanal verwendet werden, um einen Anrufvideostream zwischen dem ersten Anrufendgerät und dem zweiten Anrufendgerät in einem Videoanrufdienst zu übertragen und der Anrufvideostream Videoinhalte umfasst, die durch das erste Anrufendgerät oder das zweite Anrufendgerät aufgenommen werden;
Empfangen (S602) einer Gesichtserkennungsanwendung von dem zweiten Anrufendgerät, wobei die Gesichtserkennungsanwendung eine Gesichtserkennungsanwendungskennung umfasst und die Gesichtserkennungsanwendungskennung zur Anwendung zum Durchführen einer Gesichtserkennung an einem Benutzer, der dem ersten Anrufendgerät, das mit dem zweiten Anrufendgerät kommuniziert, entspricht, verwendet wird;
Senden (S603) einer Sitzungsinitiierungsprotokoll- bzw. SIP-Nachricht an das erste Anrufendgerät, wobei die SIP-Nachricht eine Gesichtserkennungsanforderungskennung umfasst und die Gesichtserkennungsanforderungskennung zum Anfordern einer Durchführung einer Gesichtserkennung an einem dem ersten Anrufendgerät entsprechenden Benutzer dient;
Empfangen (S604) einer Antwortnachricht der SIP-Nachricht an den Medienserver, wobei die Antwortnachricht der SIP-Nachricht angibt, dass der dem ersten Anrufendgerät entsprechende Benutzer der Durchführung einer Gesichtserkennung zustimmt;
Empfangen (S606) eines Gesichtsvideostreams von dem ersten Anrufendgerät über den ersten Videoanrufmedienübertragungskanal, wobei der Gesichtsvideostream ein Gesichtsbild des dem ersten Anrufendgerät entsprechenden Benutzers umfasst;
Erhalten (S607) eines Gesichtserkennungsergebnisses, wobei das Gesichtserkennungsergebnis ein Ergebnis einer Durchführung, basierend auf einem Gesichtsvideostream, einer Gesichtserkennung an dem dem ersten Anrufendgerät entsprechenden Benutzer ist;
Senden (S608) des Gesichtserkennungsergebnisses an das erste Anrufendgerät; und
Senden (S610) des Gesichtserkennungsergebnisses an das zweite Anrufendgerät über den zweiten Videoanrufmedienübertragungskanal, um das zweite Anrufendgerät dazu zu triggern, eine Dienstanforderung des ersten Anrufendgeräts basierend auf dem Gesichtserkennungsergebnis zu verarbeiten (S611).

8. Verfahren nach Anspruch 7, wobei
der Gesichtsvideostream ein Videostream ist, der unter Verwendung einer Kameraeinrichtung des ersten Anrufendgeräts aufgenommen wird; oder
der Gesichtsvideostream ein Videostream ist, der von einer Speichereinrichtung des ersten Anrufendgeräts erhalten wird.

9. Verfahren nach Anspruch 8, wobei das Verfahren ferner Folgendes umfasst:
Senden von Quellenangabeinformationen an das erste Anrufendgerät, wobei die Quellenangabeinformationen angeben, dass das erste Anrufendgerät den Gesichtsvideostream unter Verwendung der Kameraeinrichtung des ersten Anrufendgeräts erhält oder den Gesichtsvideostream von der Speichereinrichtung des ersten Anrufendgeräts erhält.

10. Anrufendgerät, das einen Speicher und mindestens einen mit dem Speicher verbundenen Prozessor umfasst, wobei der Speicher dazu ausgelegt ist, einen Computerprogrammcode zu speichern, der Computerprogrammcode Computeranweisungen umfasst und eine Ausführung der Computeranweisungen durch den mindestens einen Prozessor ermöglicht, dass das Anrufendgerät das Verfahren nach einem der Ansprüche 1 bis 4 oder 5-6 durchführt.

11. Medienserver, der einen Speicher und mindestens einen mit dem Speicher verbundenen Prozessor umfasst, wobei der Speicher dazu ausgelegt ist, einen Computerprogrammcode zu speichern, der Computerprogrammcode Computeranweisungen umfasst und eine Ausführung der Computeranweisungen durch den mindestens einen Prozessor ermöglicht, dass der Medienserver das Verfahren nach einem der Ansprüche 7 bis 9 durchführt.

12. Computerlesbares Speichermedium, das Computeranweisungen umfasst, wobei eine Ausführung der Computeranweisungen auf einem Anrufendgerät ermöglicht, dass das Anrufendgerät das Verfahren nach einem der Ansprüche 1 bis 4 oder 5-6 durchführt.

13. Computerlesbares Speichermedium, das Computeranweisungen umfasst, wobei eine Ausführung der Computeranweisungen auf einem Server ermöglicht, dass der Server das Verfahren nach einem der Ansprüche 7 bis 9 durchführt.

14. Kommunikationssystem, das ein erstes Anrufendgerät, ein zweites Anrufendgerät und einen Medienserver umfasst, wobei das erste Anrufendgerät das Verfahren nach einem der Ansprüche 1 bis 4 durchführt, das zweite Anrufendgerät das Verfahren nach einem der Ansprüche 5 bis 6 durchführt und der Medienserver das Verfahren nach einem der Ansprüche 7 bis 9 durchführt.

## Revendications

1. Procédé de communication, le procédé étant exécuté par un premier terminal d'appel, et le procédé comprenant les étapes suivantes :
établir (S601) un canal de transmission multimédia d'appel vidéo, le canal de transmission multimédia d'appel vidéo étant utilisé pour transmettre un flux vidéo d'appel entre le premier terminal d'appel et un second terminal d'appel dans un service d'appel vidéo, le flux vidéo d'appel comprenant un contenu vidéo capturé par le premier terminal d'appel ou par le second terminal d'appel ;
recevoir (S603) un message de protocole d'ouverture de session SIP en provenance d'un serveur multimédia, le message SIP comprenant un identifiant de demande de reconnaissance faciale, l'identifiant de demande de reconnaissance faciale servant à demander d'effectuer une reconnaissance faciale sur un utilisateur correspondant au premier terminal d'appel ;
envoyer (S604) un message de réponse au message SIP au serveur multimédia, le message de réponse au message SIP indiquant que l'utilisateur correspondant au premier terminal d'appel accepte d'effectuer une reconnaissance faciale ;
envoyer (S606) un flux vidéo facial au serveur multimédia par l'intermédiaire du canal de transmission multimédia d'appel vidéo, le flux vidéo facial comprenant une image du visage de l'utilisateur correspondant au premier terminal d'appel ; et
recevoir (S608) un résultat de reconnaissance faciale en provenance du serveur multimédia.

2. Procédé selon la revendication 1, dans lequel :
le flux vidéo facial est un flux vidéo capturé à l'aide d'un dispositif de caméra du premier terminal d'appel ; ou
le flux vidéo facial est un flux vidéo obtenu à partir d'un dispositif de stockage du premier terminal d'appel.

3. Procédé selon la revendication 2, le procédé comprenant en outre les étapes suivantes : recevoir des informations d'indication de source en provenance du serveur multimédia, les informations d'indication de source indiquant que le premier terminal d'appel obtient le flux vidéo facial au moyen du dispositif de caméra du premier terminal d'appel ou obtient le flux vidéo facial à partir du dispositif de stockage du premier terminal d'appel.

4. Procédé selon la revendication 3, dans lequel le flux vidéo facial est le flux vidéo obtenu à partir du dispositif de stockage du premier terminal d'appel et, avant l'envoi d'un flux vidéo facial au serveur multimédia par l'intermédiaire du canal de transmission multimédia d'appel vidéo, le procédé comprend en outre l'étape suivante :
recevoir (S605) des informations d'indication de canal de transmission en provenance du serveur multimédia, les informations d'indication de canal de transmission indiquant que le premier terminal d'appel doit transmettre le flux vidéo facial par l'intermédiaire du canal de transmission multimédia d'appel vidéo.

5. Procédé de communication, le procédé étant exécuté par un second terminal d'appel, le procédé comprenant les étapes suivantes :
établir (S601) un canal de transmission multimédia d'appel vidéo, le canal de transmission multimédia d'appel vidéo étant utilisé pour transmettre un flux vidéo d'appel entre le second terminal d'appel et un premier terminal d'appel dans un service d'appel vidéo, et le flux vidéo d'appel comprenant un contenu vidéo capturé par le second terminal d'appel ou par le premier terminal d'appel ;
envoyer (S602) une application de reconnaissance faciale à un serveur multimédia, l'application de reconnaissance faciale comprenant un identifiant d'application de reconnaissance faciale, l'identifiant d'application de reconnaissance faciale étant utilisé pour demander l'exécution d'une reconnaissance faciale sur un utilisateur correspondant au premier terminal d'appel communiquant avec le second terminal d'appel ;
recevoir (S610) un résultat de reconnaissance faciale en provenance du serveur multimédia par l'intermédiaire du canal de transmission multimédia d'appel vidéo, le résultat de reconnaissance faciale étant un résultat de reconnaissance faciale effectuée, sur la base d'un flux vidéo facial, sur l'utilisateur correspondant au premier terminal d'appel ; et
traiter (S611) une requête de service du premier terminal d'appel sur la base du résultat de reconnaissance faciale.

6. Procédé selon la revendication 5, dans lequel, avant la réception d'un résultat de reconnaissance faciale en provenance du serveur multimédia par l'intermédiaire du canal de transmission multimédia d'appel vidéo, le procédé comprend en outre l'étape suivante :
arrêter (S613) la transmission du flux vidéo d'appel par l'intermédiaire du canal de transmission multimédia d'appel vidéo.

7. Procédé de communication, le procédé étant exécuté par un serveur multimédia, et le procédé comprenant les étapes suivantes :
établir (S601) un premier canal de transmission multimédia d'appel vidéo et un second canal de transmission multimédia d'appel vidéo, le premier canal de transmission multimédia d'appel vidéo étant un canal de transmission multimédia d'appel vidéo entre un premier terminal d'appel et le serveur multimédia, et le second canal de transmission multimédia d'appel vidéo étant un canal de transmission multimédia d'appel vidéo entre le serveur multimédia et un second terminal d'appel ; les premier et second canaux de transmission multimédia d'appel vidéo étant utilisés pour transmettre un flux vidéo d'appel entre le premier terminal d'appel et le second terminal d'appel dans un service d'appel vidéo, le flux vidéo d'appel comprenant un contenu vidéo capturé par le premier terminal d'appel ou par le second terminal d'appel ;
recevoir (S602) une application de reconnaissance faciale en provenance du second terminal d'appel, l'application de reconnaissance faciale comprenant un identifiant d'application de reconnaissance faciale, l'identifiant d'application de reconnaissance faciale étant utilisé pour demander l'exécution d'une reconnaissance faciale sur un utilisateur correspondant au premier terminal d'appel communiquant avec le second terminal d'appel ;
envoyer (S603) un message de protocole d'ouverture de session SIP au premier terminal d'appel, le message SIP comprenant un identifiant de demande de reconnaissance faciale, l'identifiant de demande de reconnaissance faciale servant à demander d'effectuer une reconnaissance faciale sur un utilisateur correspondant au premier terminal d'appel ;
recevoir (S604) un message de réponse au message SIP au serveur multimédia, le message de réponse au message SIP indiquant que l'utilisateur correspondant au premier terminal d'appel accepte d'effectuer une reconnaissance faciale ;
recevoir (S606) un flux vidéo facial en provenance du premier terminal d'appel par l'intermédiaire du premier canal de transmission multimédia d'appel vidéo, le flux vidéo facial comprenant une image du visage de l'utilisateur correspondant au premier terminal d'appel ;
obtenir (S607) un résultat de reconnaissance faciale, le résultat de reconnaissance faciale étant un résultat de reconnaissance faciale effectuée, sur la base du flux vidéo facial, sur l'utilisateur correspondant au premier terminal d'appel ;
envoyer (S608) le résultat de reconnaissance faciale au premier terminal d'appel ; et
envoyer (S610) le résultat de reconnaissance faciale au second terminal d'appel par l'intermédiaire du second canal de transmission multimédia d'appel vidéo, pour déclencher, au niveau du second terminal d'appel, le traitement (S611) d'une requête de service du premier terminal d'appel sur la base du résultat de reconnaissance faciale.

8. Procédé selon la revendication 7, dans lequel :
le flux vidéo facial est un flux vidéo capturé à l'aide d'un dispositif de caméra du premier terminal d'appel ; ou
le flux vidéo facial est un flux vidéo obtenu à partir d'un dispositif de stockage du premier terminal d'appel.

9. Procédé selon la revendication 8, le procédé comprenant en outre les étapes suivantes : envoyer des informations d'indication de source au premier terminal d'appel, les informations d'indication de source indiquant que le premier terminal d'appel obtient le flux vidéo facial au moyen du dispositif de caméra du premier terminal d'appel ou obtient le flux vidéo facial à partir du dispositif de stockage du premier terminal d'appel.

10. Terminal d'appel, comprenant une mémoire et au moins un processeur connecté à la mémoire, la mémoire étant configurée pour stocker un code de programme informatique, le code de programme informatique comprenant des instructions informatiques et, lorsque les instructions informatiques sont exécutées par l'au moins un processeur, le terminal d'appel est alors apte à exécuter le procédé selon l'une quelconque des revendications 1 à 4 ou 5 à 6.

11. Serveur multimédia, comprenant une mémoire et au moins un processeur connecté à la mémoire, la mémoire étant configurée pour stocker un code de programme informatique, le code de programme informatique comprenant des instructions informatiques et, lorsque les instructions informatiques sont exécutées par l'au moins un processeur, le serveur multimédia est alors apte à exécuter le procédé selon l'une quelconque des revendications 7 à 9.

12. Support de stockage lisible par ordinateur, comprenant des instructions informatiques, lorsque les instructions informatiques sont exécutées sur un terminal d'appel, le terminal d'appel étant alors apte à exécuter le procédé selon l'une quelconque des revendications 1 à 4 ou 5 à 6.

13. Support de stockage lisible par ordinateur, comprenant des instructions informatiques, lorsque les instructions informatiques sont exécutées sur un serveur, le serveur étant alors apte à exécuter le procédé selon l'une quelconque des revendications 7 à 9.

14. Système de communication, comprenant un premier terminal d'appel, un second terminal d'appel et un serveur multimédia, dans lequel le premier terminal d'appel exécute le procédé selon l'une quelconque des revendications 1 à 4, le second terminal d'appel exécute le procédé selon l'une quelconque des revendications 5 à 6, et le serveur multimédia exécute le procédé selon l'une quelconque des revendications 7 à 9.
